# EUROPEAN PATENT APPLICATION

(11) **EP 4 589 401 A1**
(43) Date of publication of application: **23.07.2025**
(21) Application number: 25152939.2
(22) Date of filing: 20.01.2025
(51) Int. Cl.: G05D 7/00, G01F 3/20, F16K 11/00

(54) **VALVE ASSEMBLY INCLUDING DIAPHRAGM DRIP CHECK AND AGRICULTURAL FLUID APPLICATION SYSTEMS INCLUDING SAME**

(30) Priority: 19.01.2024 US 202463622979 P
(71) Applicant: Capstan AG Systems, Inc., Topeka, KS 66609 (US)
(72) Inventor: GRIMM, Jeffrey John, Topeka, KS 66609 (US); SCHRADER, Kale, Topeka, KS 66609 (US); BRINTNALL, Jay, Topeka, KS 66609 (US); KOCH, Jesse, Topeka, KS 66609 (US); KERL, Wyatt, Topeka, KS 66609 (US)
(74) Representative: McKinnon, Alistair James

(57) **Abstract**

A three-way valve assembly includes a housing assembly and a diaphragm drip check. The housing assembly defines an inlet, a return outlet, a dispensing outlet, a return flow path extending from the inlet to the return outlet, and a dispensing flow path extending from the inlet to the dispensing outlet. The diaphragm drip check includes a plunger and a diaphragm retained within a sensing chamber, at least one magnet coupled to the plunger and generating a magnetic field, and a sensing assembly. The plunger is operatively coupled to the diaphragm such that deflection of the diaphragm causes corresponding displacement of the plunger. The sensing assembly includes a printed circuit board and at least one sensor, the printed circuit board positioned on the housing assembly such that the at least one sensor is affected by the at least one magnet as the plunger is displaced within the sensing chamber.

## Description

### CROSS-REFERENCE TO RELATED APPLICATIONS

This application claims the benefit of priority to U.S. Provisional Patent Application No. 63/622,979, filed January 19, 2024, the entire contents of which are hereby incorporated by reference herein.

### BACKGROUND

The field of this disclosure relates generally to fluid handling systems and, more particularly, to valve assemblies for use in fluid application systems.

The agricultural industry commonly applies fluids, such as fertilizer, to fields during the cultivation of crops. For example, plants and plant precursors are often sprayed with an agricultural fluid at the time of planting to enhance germination and early development. In other applications, liquid fertilizers, pesticides, and other agrochemicals may be applied to plants or crops after planting for crop management. Agricultural fluids include, without limitation, growth promotors, growth regulators, spray fertilizers, herbicides, insecticides, and/or fungicides.

Some fluid application systems include valve assemblies that facilitate regulating and estimating the fluid flow rate through a fluid application system based on the position of a float or traveler within an interior cavity of a housing. Some known valve assemblies, for example, include a traveler, and the position of the traveler within the housing provides a visual indication of whether fluid is flowing through the fluid application system. Some known valve assemblies also include a spring to bias the traveler towards a closed position. However, such valve assemblies are designed for use with a single traveler and/or a single spring that are sealed within the valve assembly, such that the valve assembly is designed to output flow rates according to a single flow curve over a range of fluid pressures at the inlet of the valve assembly. If different valve performance is desired, a separate valve must be obtained.

### SUMMARY

In one aspect, a three-way valve assembly is provided. The three-way valve assembly includes a housing assembly defining an inlet, a return outlet, a dispensing outlet, a return flow path extending from the inlet to the return outlet, and a dispensing flow path extending from the inlet to the dispensing outlet. The three-way valve assembly further includes a diaphragm drip check including a plunger and a diaphragm retained within a sensing chamber sealed from the dispensing flow path, at least one magnet coupled to the diaphragm and generating a magnetic field, and a sensing assembly. The plunger is operatively coupled to the diaphragm such that deflection of the diaphragm causes corresponding displacement of the plunger. The sensing assembly includes a printed circuit board and at least one sensor, the printed circuit board positioned on the housing assembly such that the at least one sensor is affected by the at least one magnet as the plunger is displaced within the sensing chamber.

In another aspect, a fluid application system includes a fluid storage tank, a manifold fluidly coupled to the fluid storage tank, a fluid transport device configured to effect fluid flow of a fluid from the fluid storage tank to the manifold, and a plurality of three-way valve assemblies connected in fluid communication with the manifold. Each three-way valve assembly includes a housing assembly defining an inlet, a return outlet, a dispensing outlet, a return flow path extending from the inlet to the return outlet, and a dispensing flow path extending from the inlet to the dispensing outlet. Each three-way valve assembly also includes a diaphragm drip check comprising a plunger and a diaphragm retained within a sensing chamber sealed from the dispensing flow path, at least one magnet coupled to the diaphragm and generating a magnetic field, and a sensing assembly. The plunger is operatively coupled to the diaphragm such that deflection of the diaphragm causes corresponding displacement of the plunger. The sensing assembly comprises a printed circuit board and at least one sensor, the printed circuit board positioned on the housing assembly such that the at least one sensor is affected by the at least one magnet as the plunger is displaced within the sensing chamber.

In a further aspect, a fluid application system includes a fluid storage tank, a manifold fluidly coupled to the fluid storage tank, a plurality of three-way valve assemblies connected in fluid communication with the manifold, and a controller. Each three-way valve assembly includes a housing assembly defining an inlet, a return outlet, a dispensing outlet, a return flow path extending from the inlet to the return outlet, and a dispensing flow path extending from the inlet to the dispensing outlet. Each three-way valve assembly also includes a diaphragm drip check including a plunger and a diaphragm retained within a sensing chamber sealed from the dispensing flow path, at least one magnet coupled to the diaphragm and generating a magnetic field, and a sensing assembly. The plunger is operatively coupled to the diaphragm such that deflection of the diaphragm causes corresponding displacement of the plunger. The sensing assembly includes a printed circuit board and at least one sensor. The controller is communicatively coupled to the sensing assembly, and is configured to calculate a flow rate of fluid along the dispensing flow path based on sensor output from the sensing assembly.

### BRIEF DESCRIPTION OF THE DRAWINGS

FIG. 1 is a perspective view of an embodiment of a fluid application system.
FIG. 2 is a schematic view of a portion of the fluid application system shown in FIG. 1.
FIG. 3 is an enlarged view of a portion of the fluid application system shown in FIG. 1.
FIG. 4 is a sectional view of an example valve assembly suitable for use in the fluid application system shown in FIG. 1.
FIG. 5 is a perspective view of an example valve body suitable for use in the valve assembly shown in FIG. 4.
FIG. 6 is a front view of the valve body shown in FIG. 5.
FIG. 7 is a rear view of the valve body shown in FIG. 5.
FIG. 8 is a sectional view of the valve body shown in FIG. 6, taken along line 8-8 in FIG. 6.
FIG. 9 is a perspective view of an example valve cap suitable for use in the valve assembly shown in FIG. 4.
FIG. 10 is a front view of valve cap shown in FIG. 9.
FIG. 11 is a sectional view of the valve cap shown in FIG. 10, taken along line 11-11 in FIG. 10.
FIG. 12 is a perspective view of an example traveler suitable for use in the valve assembly shown in FIG. 4.
FIG. 13 is a front view of traveler shown in FIG. 12 .
FIG. 14 is a sectional view of the traveler shown in FIG. 13, taken along line 14-14 in FIG. 13.
FIG. 15 is a perspective view of another example traveler suitable for use in the valve assembly shown in FIG. 4.
FIG. 16 is a front view of traveler shown in FIG. 15.
FIG. 17 is a sectional view of the traveler shown in FIG. 16, taken along line 17-17 in FIG. 16.
FIG. 18 is a perspective view of another example traveler suitable for use in valve assembly shown in FIG. 4.
FIG. 19 is a front view of traveler shown in FIG. 18.
FIG. 20 is a sectional view of the traveler shown in FIG. 19, taken along line 20-20 in FIG. 19.
FIG. 21 is another schematic view of a portion of the fluid application system shown in FIG. 1, including a three-way valve assembly.
FIG. 22 is an enlarged view of a portion of the fluid application system shown in FIG. 21.
FIG. 23 is a sectional view of an example three-way valve assembly suitable for use in the fluid application system shown in FIG. 21.
FIG. 24 is a sectional view of an example valve body for use with the three-way valve assembly shown in FIG. 23.
FIG. 25 is a sectional view of an example plunger and diaphragm for use with the three-way valve assembly shown in FIG. 23.
FIG. 26 is a sectional view of an example vacuum check valve for use with the three-way valve assembly shown in FIG. 23.

### DETAILED DESCRIPTION

Example embodiments of fluid application systems including valve assemblies are described herein. The valve assemblies generally include a housing assembly and a traveler movably positioned within a cavity or chamber of the housing assembly. The housing assembly defines a valve seat, an inlet, an outlet, and a flow path extending from the inlet to the outlet. The traveler may be movable between a first position, in which the traveler engages the valve seat, and a second position, in which the traveler is displaced from the valve seat and allows fluid flow through the housing assembly. The traveler includes a plunger located at a distal end thereof. The plunger defines at least one slot that permits fluid flow therethrough when the traveler is displaced from the valve seat. The traveler may be removably mounted within the housing assembly such that the traveler may be interchanged with another traveler (e.g., a traveler with a different slot configuration).

The valve assembly may also include at least one spring operably coupled to the traveler to return the traveler to the first position from the second position. The at least one spring may be removably mounted within the housing assembly such that the at least one spring may be interchanged with another spring (e.g., a spring with a different spring constant).

The flow rate through the valve assembly may be controlled by interchanging the traveler, interchanging the at least one spring, and/or changing a fluid pressure at the inlet of the valve assembly. The flow rate through the valve assembly may be determined by a number of slots defined in the plunger, a size and shape of the at least one slot defined in the plunger, at least one parameter (e.g., a spring constant) of the at least one spring, and/or a fluid pressure at the inlet of the housing assembly. That is, the embodiments of the valve assemblies described herein facilitate controlling a flow rate through the valve assembly via interchangeable components and adjustable parameters, so that the flow rate of each valve assembly may be a desired value.

The variation in flow rate through the valve assembly over a range of fluid pressures at the inlet of the housing assembly may be controlled by interchanging the traveler, and/or interchanging the at least one spring. The variation in the flow rate through the valve assembly over a range of fluid pressures at the inlet of the housing assembly may be determined by a number of slots defined in the plunger, a size and shape of the at least one slot defined in the plunger, and/or at least one parameter (e.g., a spring constant) of the at least one spring. That is, the embodiments of the valve assemblies described herein facilitate controlling a variation in flow rate through the valve assembly via interchangeable components, so that the variation in flow rate of each valve assembly over a range of fluid pressures at the inlet of the housing assembly may correspond to a desired flow curve.

The valve assemblies described herein may also include a sensor assembly that is configured to detect a position of the traveler within the housing assembly (e.g., via a magnetic sensor). Based on the position of the traveler and the fluid pressure at the inlet of the housing assembly, a flow rate through the valve assembly may be determined.

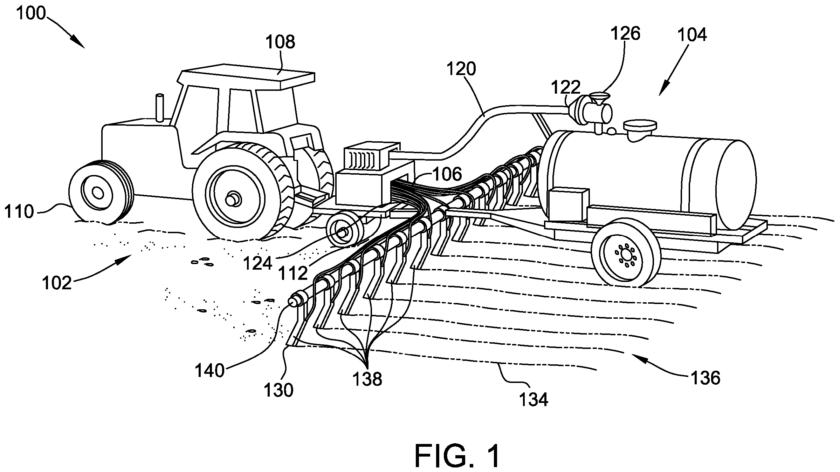

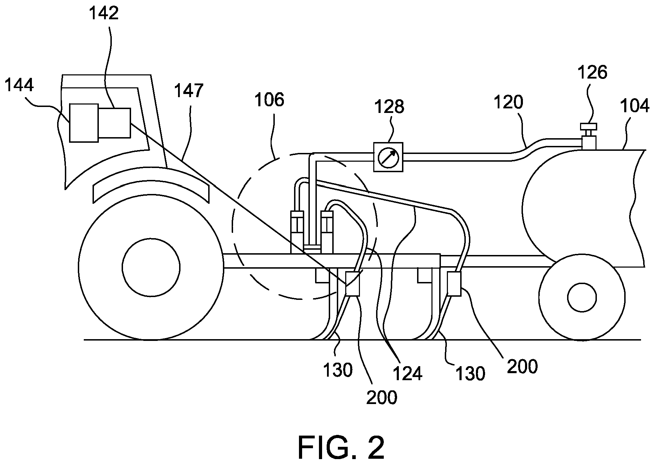

Referring now to the drawings and in particular to FIGS. 1 and 2, one embodiment of an agricultural fluid application system is designated in its entirety by the reference number 100. In the example embodiment, the fluid application system 100 is a liquid fertilizer application system including a motorized vehicle 102, a fluid storage tank 104, and a distribution manifold 106. It should be understood that valve assemblies of the present disclosure may be used in fluid application systems other than liquid fertilizer application systems, such as anhydrous ammonia application systems, other material application systems (e.g., water, chemicals, fungicides, nutrients, herbicides, sugar, combination(s) thereof), sprayer systems, and seed planting/spraying systems.

As shown, the motorized vehicle 102 is an agricultural tractor including a cab 108 and a plurality of wheels 110. However, in other embodiments, any other suitable aero or ground means may be provided for moving the fluid application system 100. For example, in other embodiments, the motorized vehicle 102 may not include a cab, and instead may have any suitable operator station. Further, in some embodiments, the motorized vehicle 102 and/or fluid application system 100 may include a global positioning system (e.g., a GPS receiver) for automated control and monitoring of the motorized vehicle 102 and/or the fluid application system 100.

In the illustrated embodiment, the fluid storage tank 104 and the distribution manifold 106 are disposed on a wheeled chassis 112 towed behind the motorized vehicle 102. In other embodiments, the motorized vehicle 102 may transport components of the fluid application system 100 in any manner that enables the fluid application system 100 to function as described herein. For example, in some suitable embodiments, one or more components of the fluid application system 100 may be incorporated into the motorized vehicle 102 without departing from some aspects of this disclosure.

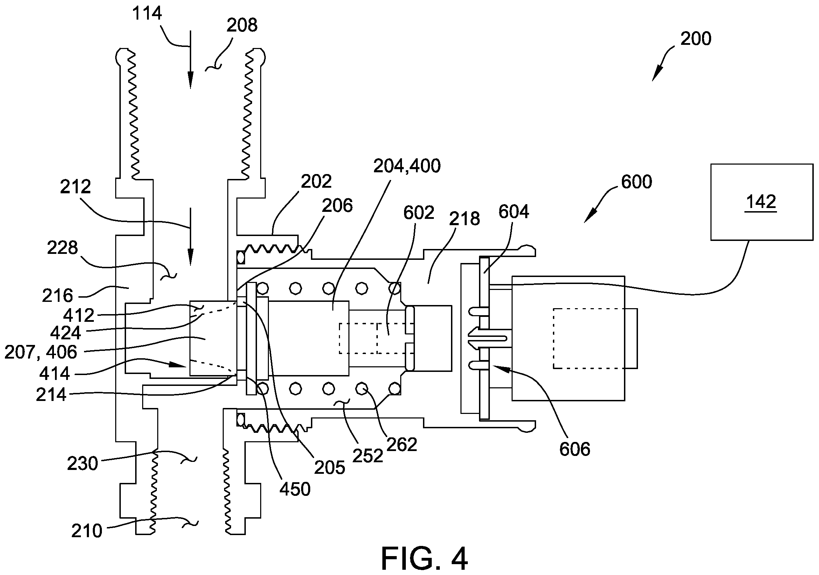

The fluid storage tank 104 may contain any type of fluid for distribution by the fluid application system 100. For example, the tank 104 may hold a fluid 114 (shown schematically in FIG. 4), such as a liquid, a mixture of liquid and powder, a volatile fluid, a gas, a mixture of liquid and gas, or other product. The fluid 114 may be a quantity of water or an agrochemical such as a fertilizer or a pesticide, and may be sprayed or dispensed onto, for example, a crop, produce, and/or the ground itself.

In reference to FIG. 2, the fluid storage tank 104 is fluidly connected to the distribution manifold 106 by a fluid line 120. Disposed between the distribution manifold 106 and the fluid storage tank 104 is a quick connect 122 (shown in FIG. 1), a valve 126, and a fluid transport device 128. In suitable embodiments, the quick connect 122, the valve 126, and the fluid transport device 128 may be coupled to any portions of the fluid application system 100 or may be omitted without departing from some aspects of this disclosure. In the example embodiment, the quick connect 122 facilitates connecting and disconnecting the fluid storage tank 104 to and from the fluid line 120. The valve 126 controls fluid flow through the fluid line 120, and the fluid transport device 128 directs fluid flow through the fluid line 120 from the fluid storage tank 104 to the distribution manifold 106. In some embodiments, the fluid transport device 128 includes a pump such as, for example and without limitation, a positive displacement pump and a centrifugal pump. In suitable embodiments, any additional components may be disposed along the fluid line 120 that enable the fluid application system 100 to function as described herein. For example, the fluid application system 100 may include any of the following: a shutoff valve, a line breakaway, an excess flow valve, a reverse flow valve, a metering device, and a strainer.

During operation, fluid stored within the tank 104 is directed from the fluid line 120 into the distribution manifold 106. The distribution manifold 106 includes a plurality of supply lines 124 that each direct fluid into a corresponding valve assembly 200. The fluid is directed through the valve assemblies 200 and into a corresponding dispensing tube 130. As will be described in more detail below, each valve assembly 200 is configured to regulate and detect characteristics of fluid flow, such as volumetric flow rate.

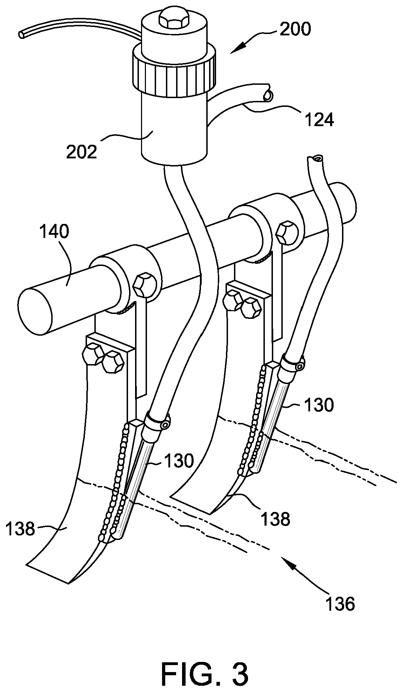

In reference to FIG. 3, a plurality of valve assemblies 200 are connected to the supply lines 124. In the example embodiment, each valve assembly 200 regulates fluid flow through a housing assembly 202 and into a dispensing tube 130 for injecting the fluid into a soil. In other embodiments, a single valve or valve assembly may control fluid flow to a plurality of dispensing tubes or dispensing devices. Moreover, in some embodiments, the valve assemblies 200 include a pulse-width modulated valve, such as a direct acting solenoid valve. Moreover, in some embodiments, the valve assemblies 200 include spray nozzles or orifices configured to produce a desired spray pattern. In some embodiments, the valve assemblies 200 include at least one quick connect (e.g., a twist and lock quick connect) that is operable to connect the supply line 124 and/or the dispensing tube 130 to the valve assembly 200.

The distribution manifold 106 distributes the fluid to the valve assemblies 200, and the valve assemblies 200 distribute the fluid to the dispensing tubes 130 for emitting the fluid from the fluid application system 100. In suitable embodiments, the fluid application system 100 may include any number of the dispensing tubes 130.

As shown in FIG. 1, in some embodiments, as the fluid is emitted from the dispensing tubes 130, the vehicle 102 moves the fluid application system 100 along a desired path for fluid application, such as rows 134 of a field 136. In the illustrated embodiment, the dispensing tubes 130 are connected to or positioned behind a soil preparation mechanism 138, such as a knife or plow, that contacts the soil as the dispensing tubes 130 dispense fluid onto and/or into the soil. The soil preparation mechanisms 138 are connected to a boom 140, which is connected to and pulled behind the vehicle 102. In other embodiments, such as spraying systems, soil preparation mechanisms may be omitted.

In reference to FIGS. 1-3, the fluid 114 (shown schematically in FIG. 4) flows through the valve assemblies 200 and may be applied to the field 136 in various ways. For example, the fluid 114 may flow from valve assemblies 200 in a pulsed pattern. In some embodiments, the system 100 may include any other suitable ground application devices to provide varying effects of placement of fluid 114 on top or below a soil surface of the field 136, such as via pipes, knives, coulters, and the like.

In certain embodiments, the valve assemblies 200 may include nozzles equipped with direct acting solenoid valves, and the system 100 may include a pump, transducers to measure fluid pressure and fluid flow, sectional regulating valves, and a pressure and/or flow controller.

As shown in FIG. 2, the fluid application system 100 also includes a controller 142 and a user interface 144 connected to the controller 142. The controller 142 may be any controller that enables the fluid application system 100 to function as described herein.

Moreover, in some embodiments, the controller 142 may be connected to and configured to send signals to and receive signals from any components of the fluid application system 100. The signals may relate to controlling operation of any of the components connected to the controller 142. In some embodiments, the controller 142 controls operation of components based at least in part on inputs of the operator. In further embodiments, the controller 142 may automatically control some operations of the fluid application system 100 based at least in part on signals received from components of the fluid application system 100.

The controller 142 may receive signals that include information relating to any operating characteristics of the fluid application system 100. For example, the controller 142 may receive information including, without limitation, flow characteristics, pressures, temperatures, duty cycles, densities, valve positions, global positioning system (GPS) data, and any other suitable characteristics of the fluid application system 100.

In suitable embodiments, the controller 142 may perform any functions based on the signals received from components of the fluid application system 100. For example, the controller 142 may perform at least one of the following functions: triggering an indicating alarm, stopping fluid flow through the fluid line 120, and/or regulating fluid flow through the fluid line 120 by controlling one or more components of the fluid application system 100.

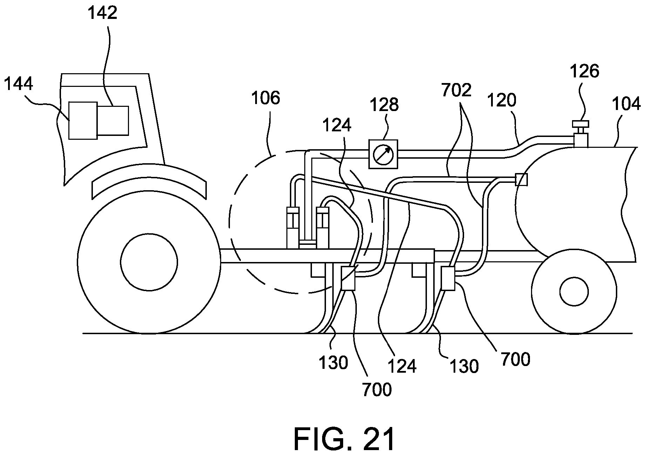

In the example embodiment, the controller 142 may receive signals from and send signals to the valve assemblies 200 and/or the three-way valve assemblies 700 (shown in FIGS. 21-26). For example, the controller 142 may receive signals from the valve assemblies 200, 700 relating to flow rate of fluid through the valve assemblies 200, 700, and compare the detected flow rate to a stored target or desired flow rate. The controller 142 may adjust operation of the fluid application system 100 based on differences between the detected flow rate and the target flow rate. Moreover, the controller 142 may compare information from a plurality of the valve assemblies 200, 700 to determine flow rates through different portions of the fluid application system 100. Based on the comparisons, the controller 142 may calibrate components of the fluid application system 100. In the illustrated embodiment, the controller 142 and the valve assemblies 200, 700 are connected by a cable 147 and may communicate via the cable 147. In other embodiments, the controller 142 and the valve assemblies 200, 700 may communicate wirelessly.

In suitable embodiments, the controller 142 may use information received from the valve assemblies 200, 700 to maintain a selected flow rate in the fluid application system 100. For example, the controller 142 may adjust valve assemblies 200, 700 or other components of fluid application system 100 based on information received from the valve assemblies 200, 700. When the valve assembly 200, 700 determines that a setpoint associated with the selected flow rate has been reached, the valve assemblies 200, 700 may send a signal to the controller 142. Then, the controller 142 may regulate the valve assemblies 200, 700 or other components of fluid application system 100 to maintain the selected flow rate. In some embodiments, the controller 142 may maintain a global flow rate through the fluid line 120 and maintain individual flow rates through each valve assembly 200, 700. Each valve assembly 200, 700 may have an individual setpoint to facilitate the controller 142 maintaining the multiple flow rates. In suitable embodiments, the controller 142 can utilize information from any sensors, such as pressure sensors, to regulate components of the fluid application system 100.

Controller 142 may generally comprise any suitable computer and/or other processing unit, including any suitable combination of computers, processing units and/or the like that may be communicatively coupled to one another (e.g., controller 142 may form all or part of a controller network). Thus, controller 142 may include one or more processor(s) and associated memory device(s) configured to perform a variety of computer-implemented functions (e.g., performing the methods, steps, calculations and/or the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) of controller 142 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) may generally be configured to store suitable computer-readable instructions that, when implemented by the processor(s), configure the controller 142 to perform various functions including, but not limited to, receiving a signal from one or more sensors associated with the displacement amount of a traveler or plunger, determining a displacement amount of a traveler or plunger within the housing assembly of a valve assembly, calculating the volumetric flow rate through a valve assembly based on the displacement amount of a traveler or plunger, receiving operator inputs, performing the calculations, algorithms and/or methods described herein and various other suitable computer-implemented functions.

In the example embodiment, the controller 142 sends information, such as flow characteristics and diagnostic data, to the user interface 144 for presentation to and interpretation by an operator. The user interface 144 may be any suitable interface that allows the operator to receive the information. For example, the user interface 144 may include a display device mounted in the vehicle 102 to display the information for the operator. In further embodiments, the user interface 144 may be a mobile computing device wirelessly connected to the controller 142. In suitable embodiments, the user interface 144 may allow the operator to input values and/or to control components of the fluid application system 100. The user interface 144 may be coupled to the controller 142 such that commands from the user interface 144 are relayed to the controller 142 and/or other components of the fluid application system 100.

In some embodiments, the user interface 144 is configured to receive fluid characteristics, traveler characteristics, or other valve assembly characteristics as user inputs. Fluid characteristics include, for example and without limitation, specific gravity, density, viscosity, and a specific type of fluid. Traveler characteristics include, for example and without limitation, a mass or weight of the traveler, a shape of the traveler, a configuration of slots defined in the traveler, and a drag coefficient associated with the shape of the traveler. Valve assembly characteristics include, for example and without limitation, parameters of a spring used in the valve assembly (e.g., spring constant, spring length, linear or nonlinear spring response type, etc.) and flow restriction coefficients (e.g., of downstream plumbing, such as hose size, hose length, orifices, jets, application tubes, etc.). In some embodiments, the controller 142 is configured to calculate one or more values based on the user inputs including, for example and without limitation, a pressure of fluid at the inlet of a valve assembly needed to generate a drag force on the traveler equal to the biasing force exerted by at least one spring on the traveler, and a volumetric flow rate.

With reference to FIGS. 3 and 4, the valve assembly 200 includes a housing assembly 202 and a pressure-actuated traveler 204 (referred to interchangeably herein as the traveler). The traveler 204 may include any of the example travelers 300, 400, 500 described herein or may include any other suitable traveler such that the valve assembly 200 functions as described herein.

The housing assembly 202 defines a valve seat 206, an inlet 208, an outlet 210, and a flow path 212 extending from the inlet 208 to the outlet 210. In the example embodiment, the inlet 208 is connectable, directly or indirectly to the fluid line 128 and receives fluid 114 therefrom. When the valve assembly 200 is open, fluid 114 flows from the inlet 208 to the outlet 210 along the flow path 212. The housing assembly 202 also defines an aperture 214 located fluidly between the inlet 208 and the valve seat 206. Further, the housing assembly may also define at least one cavity or chamber (e.g., cavity or chamber 228, 230, 252 as described further herein) therein.

The housing assembly 202 includes a valve body 216, and a valve cap 218 removably coupled to the valve body 216 (e.g., via a threaded connection). In operation, when the traveler 204 is displaced from the valve seat 206 (e.g., when the traveler 204 moves to the right in FIG. 4), fluid 114 flows through the valve assembly 200 from the inlet 208 towards the outlet 210. The traveler 204 is displaceable from a first position, as shown in FIG. 4, towards a second position (not specifically shown), for example, in response to a pressure differential across the traveler 204 (e.g., across a plunger 207 of the traveler 204).

In the illustrated embodiment, the traveler 204 includes a seal 205 coupled thereto, and the seal 205 sealingly engages the valve seat 206 when the traveler is in the first position to inhibit fluid flow along flow path 212. The seal 205 may include, for example and without limitation, an O-ring seal, a square seal, or any other suitable seal that enables the valve assembly to function as described herein. In other embodiments, the valve assembly 200 does not include a seal. For example, in some embodiments, the valve assembly 200 includes an external check valve (not shown) downstream of the traveler 204, such that specific sealing components (e.g., the seal 205) are not needed.

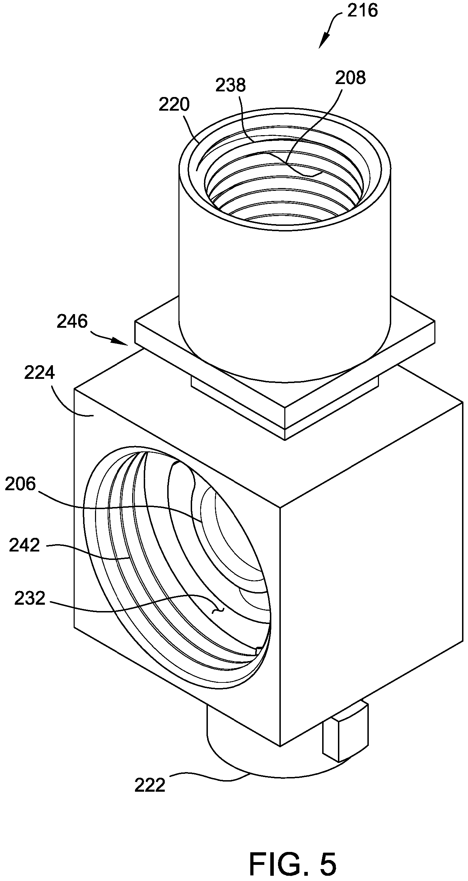

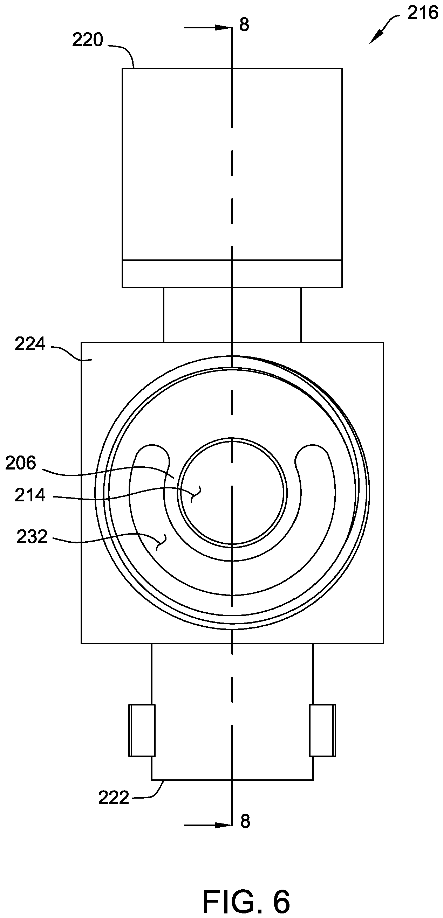

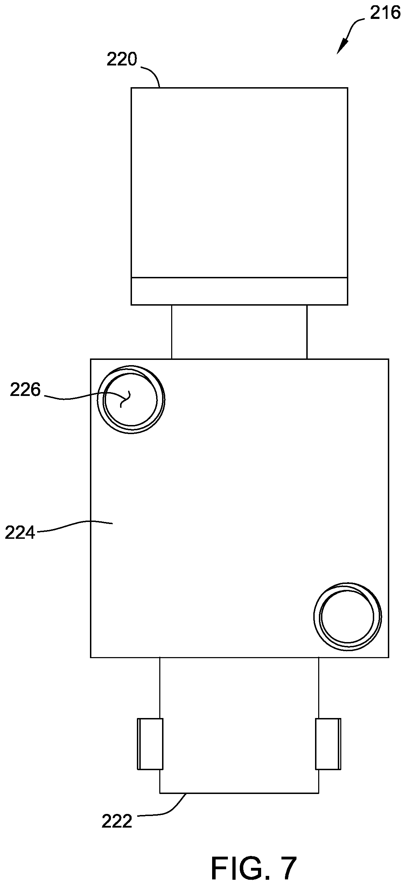

With reference to FIGS. 4-8, the valve body 216 extends from an inlet end 220 to an outlet end 222, and includes side walls 224. The side walls 224 define two fastener holes or openings 226 (shown in FIG. 7) therein that may facilitate mounting or otherwise coupling the valve body 216 (or the valve assembly 200) to other structure (e.g., boom 140). In the illustrated embodiment, the fastener openings 226 are bayonet lugs adapted for connection with corresponding bayonet lug bolts to mount the valve body 216. Such fasteners are commonly used in the agricultural industry to mount nozzles or nozzle or nozzle assemblies, and thereby facilitate mounting valve assembly 200 into existing fluid application systems. In other embodiments, the side walls 224 may define any suitable number of holes that enables the valve assembly 200 to function as described herein.

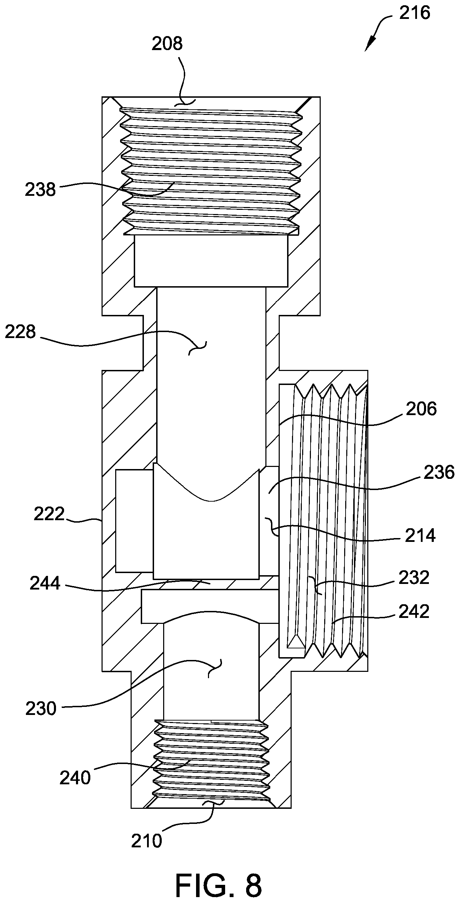

The valve body 216 defines a chamber or cavity 228 (shown in FIG. 8) that receives fluid from the inlet 208 when fluid flows through the valve assembly 200. The valve body 216 also defines a chamber or cavity 230 (shown in FIG. 8) from which fluid flows through the outlet 210 when fluid flows through the valve assembly 200. The valve body 216 further defines a chamber 232 located fluidly between the inlet chamber 228 and the outlet chamber 230. The chamber 232 receives a portion of the valve cap 218 therein, as shown in FIG. 4. The valve body 216 also includes a side surface 236 that defines the aperture 214.

The valve body 216 also includes a first threaded coupler 238 near the inlet 208, a second threaded coupler 240 near the outlet 210, and a third threaded coupler 242. Each of the threaded couplers 238, 240, 242 facilitates threadably coupling other structure to the valve body 216. For example, the first threaded coupler 238 may facilitate threaded connection between the valve body 216 and an inlet fitting, quick connect (not shown) and/or the supply line 124, and the second threaded coupler 240 may facilitate threaded connection between the valve body 216 and an outlet fitting (not shown), quick connect, and/or the dispensing tube 130. Further, the third threaded coupler 242 may facilitate threadably coupling the valve cap 218 to the valve body 216, as further described herein.

The valve body 216 also includes an interior wall 244 that extends from the side walls 224 and facilitates directing fluid 114 to flow from the inlet 208 to the outlet 210 when fluid flows through the valve assembly 200.

The illustrated valve body 216 also includes a square neck mounting feature 246 to facilitate connection of other structures to the valve assembly 200 (e.g., nozzle tips, etc.). The square neck mounting features 246 is sized and shaped to connect with fasteners or clamps that are commonly or universally used in the agricultural industry. Such fasteners commonly include a square slot with a top brackets slot that opens in a first direction and a lower bracket slot that opens in a second direction to capture the square neck mounting feature 246. An edge of the square neck mounting feature 246 is co-planar with the side wall 224 that defines the fastener openings 226 to facilitate alignment of a nozzle cap. Other embodiments may include other mounting features, such as a round neck mounting features.

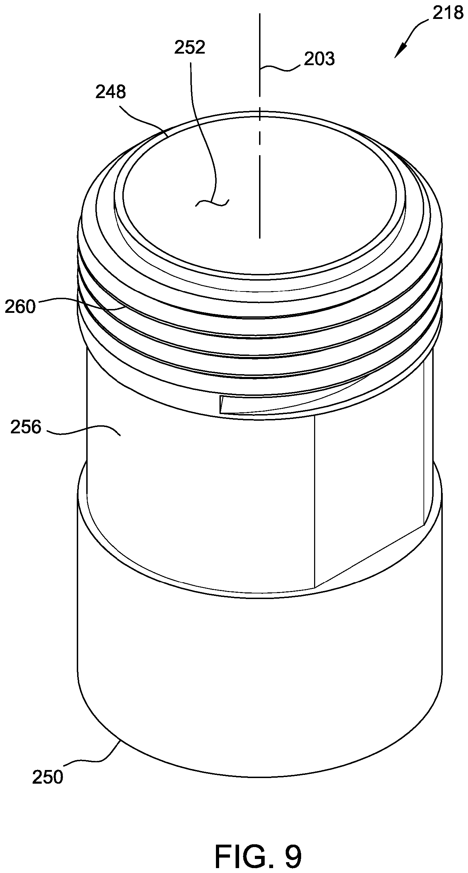

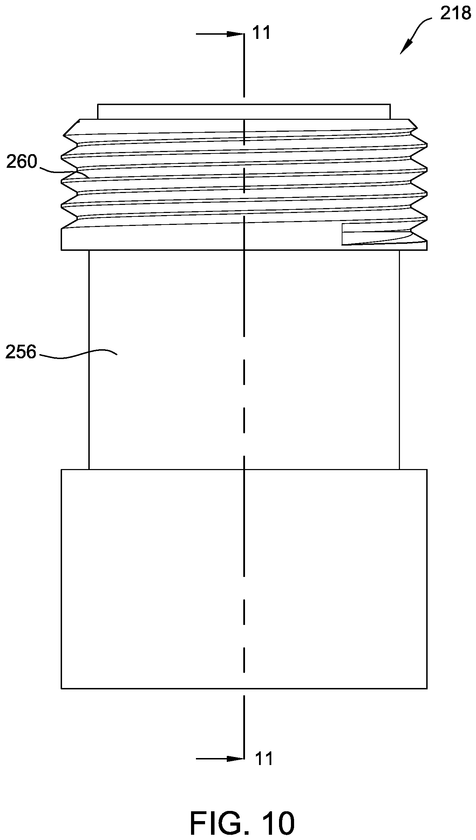

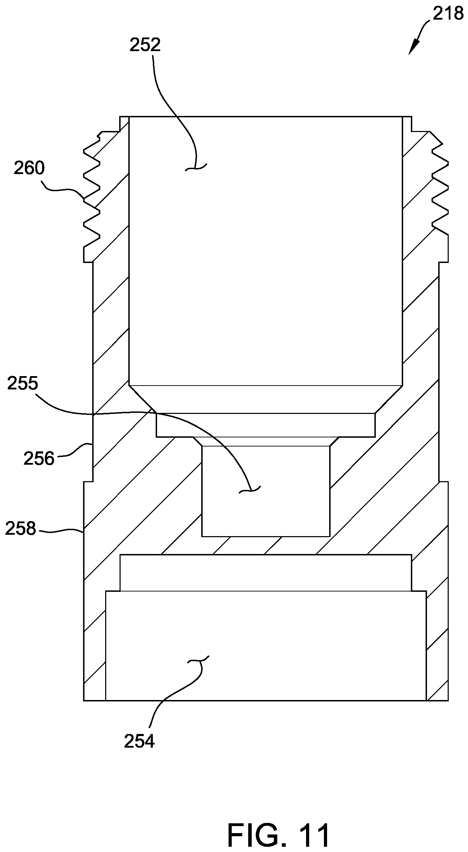

With reference to FIGS. 4 and 9-11, the valve cap 218 extends from a first end 248 to a second end 250 along a central axis 203. The valve cap 218 defines a chamber or cavity 252 and a chamber or cavity 254 (shown in FIG. 11), and the valve cap 218 includes a side wall 256 and an interior wall 258. More specifically, the side wall 256 and the interior wall 258 define the chambers or cavities 252, 254, and the interior wall 258 separates the chambers or cavities 252, 254 from each other. A portion 255 of the chamber or cavity 254 is sized and shaped to receive a portion of the traveler 204 therein in order to facilitate maintaining alignment of the traveler 204 within the valve assembly 200.

The valve cap also 218 includes a threaded coupler 260 located at the first end 248 of the valve cap 218. In operation, the threaded coupler 260 of the valve cap 218 engages with the third threaded coupler 242 of the valve body 216 to threadably couple the valve cap 218 to the valve body 216. In the illustrated embodiment, the valve cap 218 is removably coupled to the valve body 216. As a result, the components of the valve assembly 200 (e.g., traveler 204, plunger 207, spring 262, etc.) can be serviced and/or interchanged without disconnecting or otherwise interrupting the plumbing of the fluid application system 100. In other embodiments, the valve cap 218 may be coupled to the valve body 216 using any suitable coupling that enables the valve assembly 200 to function as described herein.

When the valve cap 218 is coupled to the valve body 216 (e.g., as shown in FIG. 4), the chamber or cavity 252 of the valve cap 218 is fluidly connected between the inlet 208 and the outlet 210 of the valve assembly 200 and between the chamber 228 and the chamber 230 of the valve body 216.

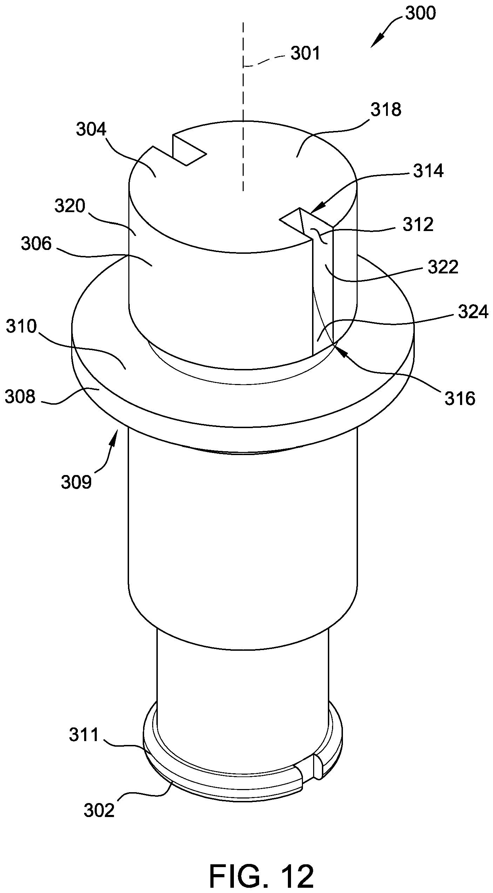

FIGS. 12-14 illustrate an example pressure-actuated traveler 300 suitable for use in the valve assembly 200. With reference FIGS. 12-14, the traveler 300 extends from a proximal or first end 302 to a distal or second end 304 along a central axis 301, and the traveler 300 includes a plunger 306 at the distal end 304 thereof. The traveler 300 is generally cylindrical about the central axis 301. The traveler 300 also includes a flange 308 that includes a seating surface 310. When the traveler 300 is in the first position, the seating surface 310 engages the seal 205 (shown in FIG. 4) or, where no seal is present, the valve seat 206 (also shown in FIG. 4) directly, to inhibit fluid flow through the valve assembly 200. That is, in embodiments of the valve assembly 200 including the seal 205, the seal 205 is positioned between the plunger 306 and the seating surface 310.

The flange 308 of the illustrated embodiment also includes an engagement surface 309 that is operable to engage at least one spring (e.g., spring 262) of the valve assembly 200, as further described herein. The traveler 300 also includes a flange 311 that is received within the portion 255 of the cavity or chamber 252 of the valve cap 218, as further described herein.

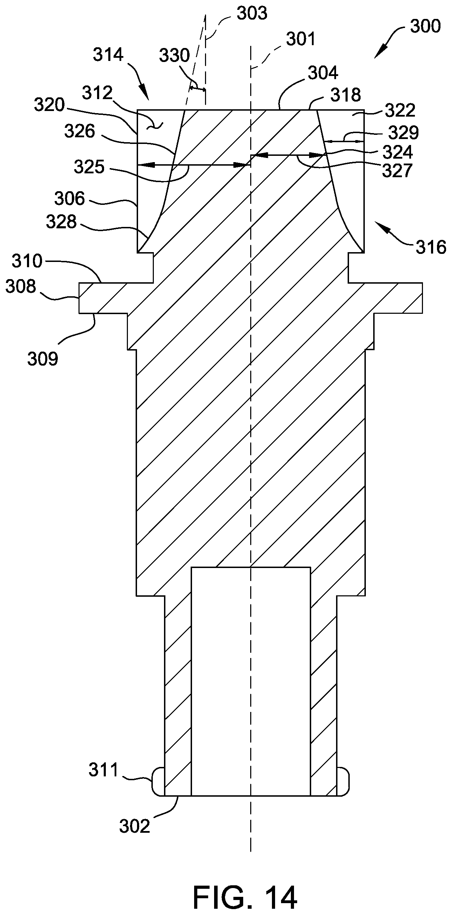

The plunger 306 defines at least one slot 312 therethrough that extends from an inlet end 314 to an outlet end 316. More specifically, the plunger includes a base surface 318 and side surfaces 320, and the at least one slot 312 extends from the inlet end 314 at the base surface 318 to the outlet end 316 at the side surfaces 320 (or vice-versa). A radius 325 (shown in FIG. 14) of each side surface 320 is defined between the central axis 301 and the side surface 320.

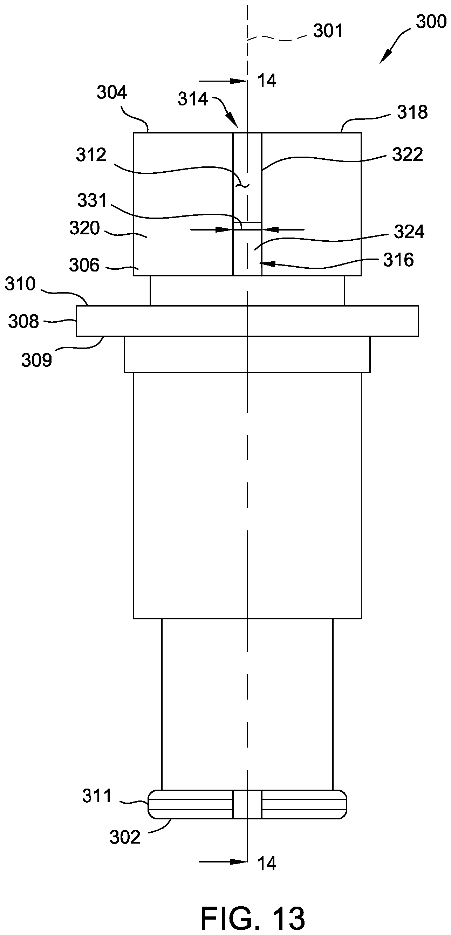

The plunger 306 also includes side slot surfaces 322 and a base slot surface 324 corresponding to each slot 312 that is defined in the plunger 306. Each slot 312 is defined by the corresponding side slot surfaces 322 and the corresponding base slot surface 324. The side slot surfaces 322 and the base slot surface 324 that define each slot 312 may include variations in width (e.g., width 331, shown in FIG. 13) and/or depth (e.g., depth 329, shown in FIG. 14) between the inlet end 314 and the outlet end 316 such that each slot 312 may vary in width (e.g., width 331) and/or depth (e.g., depth 329) between the respective inlet end 314 and the respective outlet end 316.

In some embodiments, the slots 312 may be defined in an axisymmetric arrangement about the central axis 301. That is, the two slots 312 are each defined in the plunger 306 approximately 180 degrees apart with respect to rotation about the central axis 301. The axisymmetric arrangement of the slots 312 facilitates maintaining alignment of the traveler 300 within the cavity or chamber 252 as the traveler moves within the cavity or chamber 252. That is, when the slots 312 are defined in an axisymmetric arrangement, and for a given displacement amount of the traveler 300 from the valve seat 206, a similar flow rate of fluid will flow through each slot 312 such that lateral forces acting on the traveler (e.g., forces acting perpendicular to the central axis 301) due to fluid flow through the slots 312 will tend to cancel out and maintain alignment of the traveler 300 within the cavity or chamber 252.

In the embodiment illustrated in FIGS. 12-14, the plunger 306 includes four side slot surfaces 322 and two base slot surfaces 324 that define two slots 312 that are generally of the same size and shape. That is, two of the side slot surfaces 322 and one of the base slot surfaces 324 define one slot 312, and the other two side slot surfaces 322 and the other base slot surface 324 define the other slot 312. In some embodiments, having multiple identical slots 312 may be preferred so that the difference in flow rate at different positions is more intuitive to the user. In other embodiments, no slots 312 of the plunger 306 may have an identical configuration (i.e., all slots 312 have a different or unique configuration) to facilitate achieving flow parameters to accommodate specific needs. In other embodiments, the plunger 306 may define any suitable number of slots 312 having any suitable size and shape that enables the valve assembly 200 to function as described herein. In some embodiments, for example, the plunger 306 may define between two and twelve slots 312 therethrough, between two and ten slots 312 therethrough, between two and eight slots 312 therethrough, between two and six slots 312 therethrough, or between two and four slots 312 therethrough.

With reference to FIG. 14, each base slot surface 324 is tapered radially outward from the central axis 301 between the inlet end 314 and the outlet end 316 of each slot 312 such that a radius 327 of each base slot surface 324 relative to the central axis 301 increases between the inlet end 314 and the outlet end 316 of each slot. That is, each slot 312 has a greatest depth 329 at the inlet end 314 and the shallowest depth 329 at the outlet end 316, where the depth 329 of each slot 312 is defined as the radial distance (e.g., distance perpendicular to the central axis) between the base slot surface 324 and the side surfaces 320 in which the slot 312 is defined.

In the illustrated embodiment, the base slot surface 324 of each slot 312 includes a linearly tapered portion 326 and a non-linearly tapered portion 328. Within the linearly tapered portion 326, the radius 327 of each base slot surface 324 is linearly tapered with respect to the central axis 301 such that the depth 329 of each slot 312 changes linearly. Within the non-linearly tapered portion 328, the radius 327 of each base slot surface 324 with respect to the central axis 301 is non-linearly tapered (e.g., curved) such that the depth 329 of each slot 312 changes non-linearly (e.g., exponentially). In the illustrated embodiment, the radius 327 of the base slot surface 324 is linearly tapered over the linearly tapered portion 326 at an angle 330 of between 10 degrees and 15 degrees relative to the central axis 301 (or axis 303, which is parallel to the central axis 301) of the traveler 300. In other embodiments, the radius 327 of each base slot surface 324 relative to the central axis 301 may be respectively tapered at any suitable angle 330 relative to the central axis 301 of the traveler 300 over any suitable number of linearly tapered portions 326 and/or non-linearly tapered portions 328 that enable the valve assembly 200 to function as described herein. Stated another way, the plunger 306 may include at least one curved edge (e.g., the non-linearly tapered portion 328 of the base slot surface 324), and the at least one slot 312 may be at least partially defined by the at least one curved edge. Further, the plunger 306 may include at least one straight edge (e.g., the linearly tapered portion 326 of the base slot surface 324), and the at least one slot 312 may be at least partially defined by the at least one straight edge. The tapered or angled configuration of the slots 312 facilitates greater control over flow rate (i.e., more precise) for any given position of the traveler 300 as compared, for example, to a plunger having straight slots or flat faces. In addition, the tapered or angled configuration of the slots 312 facilitates a greater change in flow rate over a shorter stroke length of the traveler 300 as compared, for example, to a plunger having straight slots or flat faces. This, in turn, facilitates electronic detection of the position of the traveler using sensors, such as the sensor assemblies described herein, which may have relatively small operational detection ranges (e.g., less than an inch, such as 0.5 inches, or 0.25 inches).

The side slot surfaces 322 of each slot 312 in the plunger 306 are generally flat and continuous such that there is no substantial variation in the width 331 (shown in FIG. 13) of each slot 412, where the width 331 is defined as a distance generally perpendicular to the central axis 301. In other embodiments, each respective side slot surface 322 may be angled relative to the central axis 301 or may include multiple portions that are each angled with respect to the central axis 301 (e.g., at different angles) such that the width 331 of each slot may vary between the inlet end 314 and the outlet end 316 of each respective slot 312 (e.g., linearly or non-linearly). In any embodiment, each respective side slot surface 322 may have any suitable configuration that enables the valve assembly 200 to function as described herein.

In operation, and with additional reference to FIG. 4, the traveler 300 is positioned within the cavity or chamber 252 and is moveable between a first position, in which the traveler 300 engages the valve seat 206, and a second position, in which the traveler 300 is displaced from the valve seat 206 and allows fluid 114 to flow through the chamber 252 and along the flow path 212 within the valve assembly 200. In some embodiments, in the first position, the traveler 300 sealingly engages the valve seat 206, via the seating surface 310 and the seal 205. In other embodiments, the traveler 300 engages the valve seat 206 without an intervening seal. The plunger 306 is received within the aperture 214 and slides within the aperture 214 as the traveler 300 moves between the first position and the second position. The aperture 214 is sized and shaped to facilitate engagement between the plunger 306 (e.g., side surfaces 320) and the valve body 216 (e.g., surface 236) to restrict lateral movement of the traveler 300 within the chamber 252 such that the traveler 300 maintains alignment within the chamber 252. The at least one slot 312 of the plunger 306 permits fluid flow therethrough from the inlet chamber 228 into the valve cap chamber 252 and along the flow path 212 when the traveler 300 is displaced from the valve seat 206. The traveler 300 is positioned within the cavity or chamber 252 such that the traveler 300 is not vented to an external environment (e.g., the atmosphere).

Further, the flange 311 of the traveler 300 is received within the portion 255 of the chamber 252 and slides within the portion 255 of the chamber 252 as the traveler 300 moves between the first position and the second position. The portion 255 of the chamber 252 is sized and shaped to facilitate engagement between the flange 311 and the valve cap 218 to restrict lateral and rotational movement of the traveler 300 within the chamber 252 such that the traveler 300 maintains alignment within the chamber 252.

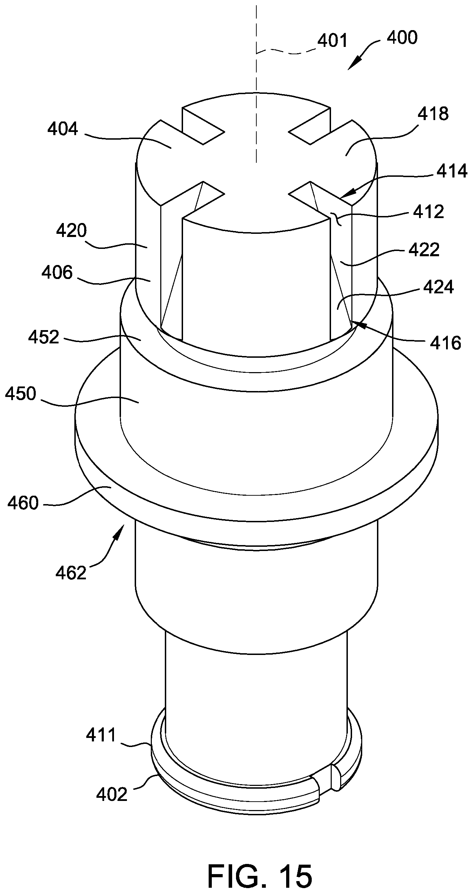

FIGS. 15-17 illustrate another example pressure-actuated traveler 400 of the valve assembly 200. The traveler 400 is similar to the traveler 300 shown in FIGS. 12-14, except as described herein. Components of the traveler 400 include similar numbering to similar components of the traveler 300, with part numbers increased by 100.

As shown in FIGS. 15-17, the traveler 400 includes a plunger 406 that defines four slots 412 in an axisymmetric configuration about the central axis 401. That is, the four slots 412 are each defined in the plunger 406 approximately 90 degrees apart with respect to rotation about the central axis 401. In the illustrated embodiment, each slot 412 is identical, and each valve assembly 200 may emit a flow rate of 5 gallons per minute into the corresponding fluid dispensing line 130 when the valve assembly 200 is fully opened (e.g., when traveler 400 is displaced from the valve seat 206 as far as possible). In other embodiments, each respective slot 412 may have any suitable configuration that enables the valve assembly 200 to function as described herein.

The traveler 400 also includes a body 450 that includes a seating surface 452. In operation, when the traveler 400 is in the first position, the seating surface 452 engages the valve seat 206 (shown in FIG. 4), and, in embodiments where the traveler includes a seal 205, sealingly engages the seal 205 (also shown in FIG. 4) to inhibit fluid flow through the valve assembly 200. That is, in embodiments of the valve assembly 200 including the seal 205, the seal 205 is positioned between the plunger 406 and the seating surface 452.

In some embodiments, the traveler 400 also includes a flange 460. The flange 460 includes an engagement surface 462 operable to engage at least one spring (e.g., spring 262) of the valve assembly 200. In some embodiments, such as embodiments of the valve assembly 200 including the seal 205, the flange 460 can be designed to place a spring preload force against the seal 205 independent of the seal position in order to control a desired amount of sealing pressure. For example, the position of the flange 460 relative to the first end 402 of the traveler 400 can be selected such that a desired compressive preload force is applied to the spring 262 when the traveler 400 and spring 262 are loaded into the valve cap 218. This compressive preload force is transmitted to the seal 205 through the traveler 400 to apply a spring preload force against the seal 205. As the distance between the flange 460 and the first end 402 of the traveler 400 decreases, the compressive preload force will increase, and vice-versa. The traveler 400 can be interchanged with travelers having flanges 460 located at different positions along the traveler body so that a desired spring preload force can be applied to seal 205. In other embodiments, such as where the valve assembly 200 does not include a spring, the traveler 400 may or may not include the flange 460.

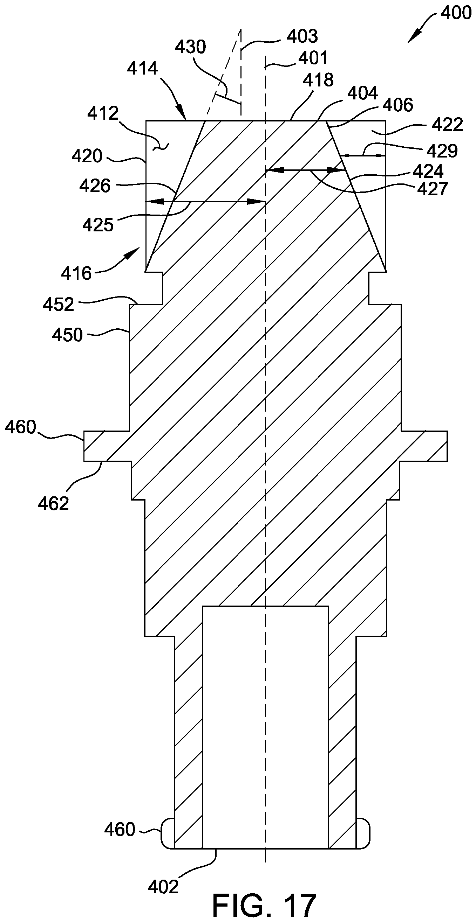

As shown in FIG. 17, the base slot surface 424 is generally flat and continuous between the inlet end 414 and outlet end 416 of each slot 412 such that the radius 427 of the base slot surface 424 is linearly tapered over one linearly tapered portion 426 at a constant angle 430 of between approximately 15 degrees and 25 degrees relative to the central axis 401 of the traveler 400. In other embodiments, the base slot surface 424 may include multiple linearly tapered portions 426 with different taper angles 430 relative to the central axis 401 and/or the base slot surface 424 may include non-linearly tapered portions (e.g., similar to non-linearly tapered portions 328 of the traveler 300) over which the radius 427 of the base slot surface 424 relative to the central axis 401 is non-linearly tapered (e.g., over which the base slot surface 424 may be curved). In any embodiment, the base slot surface 424 may have any suitable configuration that enables the valve assembly 200 to function as described herein.

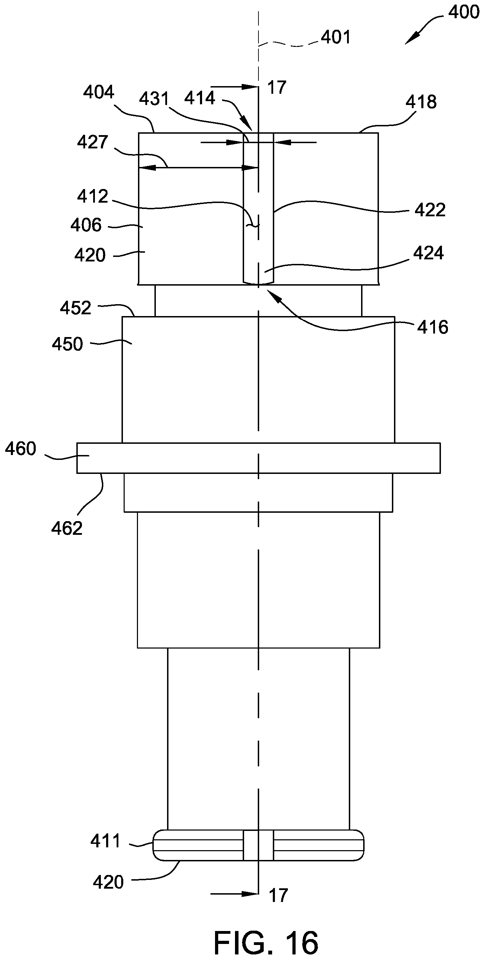

Additionally, the side slot surfaces 422 of each slot 412 in the plunger 406 are generally flat and continuous such that there is no substantial variation in the width 431 (shown in FIG. 16) of each slot 412. In other embodiments, each respective side slot surface 422 may be angled relative to the central axis 401 or may include multiple portions that are each angled with respect to the central axis 401 (e.g., at different angles) such that the width 431 of each slot may vary between the inlet end 414 and the outlet end 416 of each respective slot 412 (e.g., linearly or non-linearly). In any embodiment, each respective side slot surface 422 may have any suitable configuration that enables the valve assembly 200 to function as described herein.

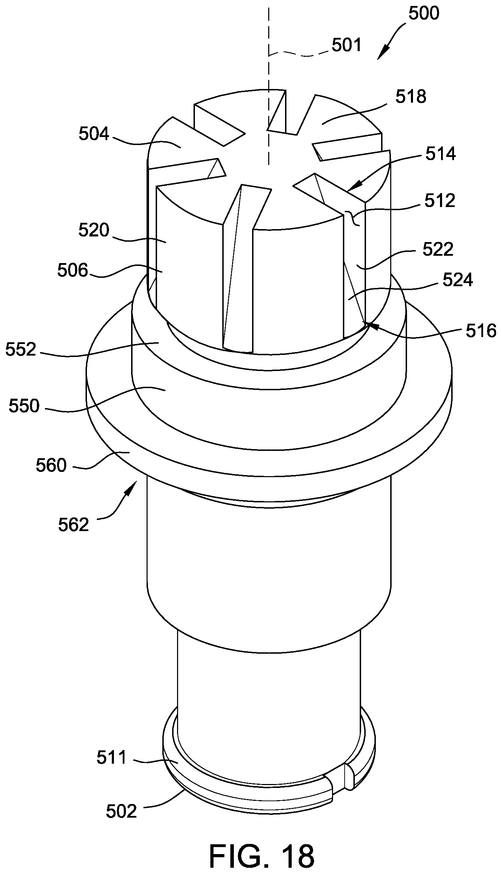

FIGS. 18-20 illustrate another example pressure-actuated traveler 500 of the valve assembly 200. The traveler 500 is similar to the traveler 300 shown in FIGS. 12-14, except as described herein. Components of the traveler 500 include similar numbering to similar components of the traveler 300, with part numbers increased by 200.

As shown in FIGS. 18-20, the traveler 500 includes a plunger 506 that defines six slots 512 in an axisymmetric configuration about the central axis 501. That is, the six slots 512 are each defined in the plunger 506 approximately 60 degrees apart with respect to rotation about the central axis 501. In the illustrated embodiment, each slot 512 is identical. In other embodiments, each respective slot 512 may have any suitable configuration that enables the valve assembly 200 to function as described herein.

The traveler 500 also includes a body 550 that includes a seating surface 552. In operation, when the traveler 500 is in the first position, the seating surface 552 engages the valve seat 206 (shown in FIG. 4), and, in embodiments where the traveler 400 includes a seal 205 (also shown in FIG. 4), sealingly engages the seal 205 to inhibit fluid flow through the valve assembly 200. That is, in embodiments of the valve assembly 200 including the seal 205, the seal 205 is positioned between the plunger 506 and the seating surface 552.

In some embodiments, the traveler 500 also includes a flange 560. The flange 560 includes an engagement surface 562 operable to engage at least one spring (e.g., spring 262) of the valve assembly 200.

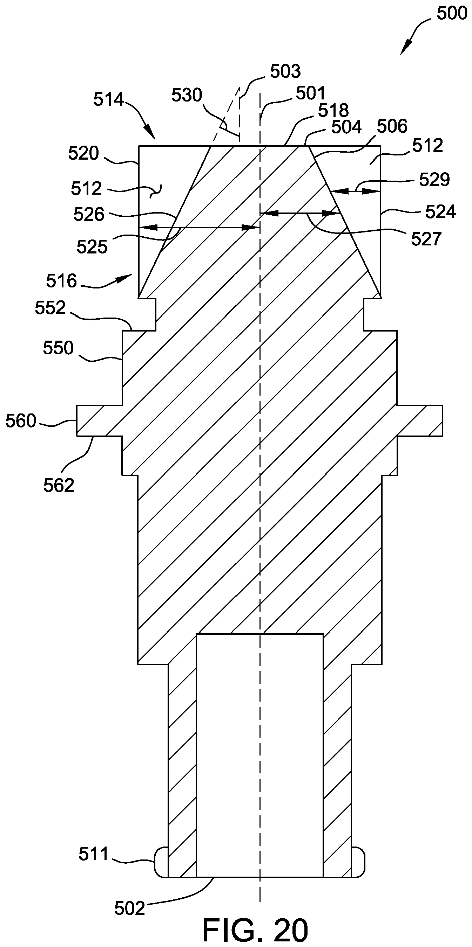

As shown in FIG. 20, the base slot surface 524 of each slot 512 is generally flat and continuous between the inlet end 514 and outlet end 516 of each slot 512 such that the radius 527 of the base slot surface 524 is linearly tapered over one linearly tapered portion 526 at a constant angle 530 of between approximately 20 degrees and 30 degrees relative to the central axis 501 of the traveler 500. In other embodiments, the base slot surface 524 may include multiple linearly tapered portions 526 with different taper angles 530 relative to the central axis 501 and/or the base slot surface 524 may include one or more non-linearly tapered portions (e.g., similar to non-linearly tapered portions 328 of the traveler 300) over which the radius 527 of the base slot surface 524 relative to the central axis 501 is non-linearly tapered (e.g., over which the base slot surface 524 is curved). In any embodiment, the base slot surface 524 may have any suitable configuration that enables the valve assembly 200 to function as described herein.

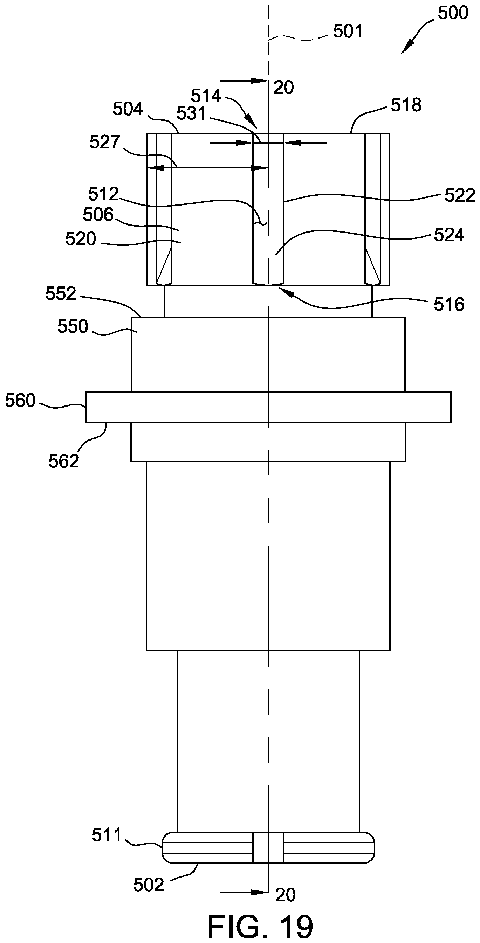

Additionally, the side slot surfaces 522 of each slot 512 in the plunger 506 are generally flat and continuous such that there is no substantial variation in the width 531 (shown in FIG. 19) of each slot 512. In other embodiments, each respective side slot surface 522 may be angled relative to the central axis 501 or may include multiple portions that are each angled with respect to the central axis 501 (e.g., at different angles) such that the width 531 of each slot may vary between the inlet end 514 and the outlet end 516 of each respective slot 512 (e.g., linearly or non-linearly). In any embodiment, each respective side slot surface 522 may have any suitable configuration that enables the valve assembly 200 to function as described herein.

Returning to FIG. 4, the valve assembly 200 includes a traveler 204 similar to the traveler 400 shown in FIGS. 15-17, and the traveler 204 will be interchangeably referred to as traveler 400. In other embodiments, the traveler 204 may be any of the travelers 300, 400, 500, or may be any other suitable traveler 204 that enables the valve assembly 200 to function as described herein.

In the illustrated embodiment, the side surfaces 420 of the plunger 406 engage surface 236 of the valve body 216 such that substantial fluid flow occurs only through the at least one slot 412 of the plunger 406 when the traveler 400 is displaced from the valve seat 206. Therefore, the size, shape, and number of slots 412 defined in plunger 406 directly affect the flow rate of fluid 114 through the valve assembly 200 when the traveler 400 is displaced from the valve seat 206.

With reference to FIG. 4, as the traveler 400 is displaced from the valve seat 206, the flow rate of fluid 114 through the valve assembly 200 increases. The flow rate of fluid 114 through the valve assembly 200 as the traveler 400 is displaced from the valve seat 206 may increase linearly, exponentially, or according to any other variation depending on the size, shape, number of slots 412 defined in the plunger 406, and the distance or amount which the traveler 400 is displaced from the valve seat 206.

Stated another way, an effective orifice size of the plunger 406, defined as a cumulative cross-sectional area of the at least one slot 412 through which fluid flows at the outlet end 416 of the at least one slot 412, continuously increases as the traveler 400 is displaced from the first position towards the second position. As the effective orifice size of the plunger 406 increases, the flow rate of fluid 114 through the valve assembly 200 (e.g., from the inlet chamber 228 into the valve cap chamber 252, and into the outlet chamber 230) increases. When the traveler 400 reaches its maximum displacement (e.g., hits the stop at the top of its travel), fluid flow through the at least one slot 412 transitions to that of a fixed orifice and additional flow rate through the valve assembly 200 (e.g., from a higher inlet pressure) is not measurable by the sensor assembly 600 (described further herein).

A displacement amount of the traveler 400 from the first position varies based on (i) the pressure differential across the plunger 406 (e.g., a difference in pressure within the inlet chamber 228 and the valve cap chamber 252) and (ii) a size and shape of the at least one slot 412. For example, a higher pressure differential across the plunger 406 may cause the traveler 400 to be displaced further from the first position, which may induce a higher flow rate of fluid 114 through the valve assembly 200. Additionally, using a traveler with a plunger defining slots with a greater width (e.g., width 431) and/or depth (e.g., depth 429) within the valve assembly 200 may cause the displacement amount of the traveler to be smaller at a given pressure differential across the plunger due to the larger effective orifice size of the plunger at a given displacement amount of the traveler 400.

The displacement amount of the traveler 400 from the first position may also vary based on the number of slots 412 defined in the plunger 406. For example, for a plunger with more slots defined therein, the displacement amount of the traveler (e.g., for a given pressure differential across the plunger) may be smaller than a traveler with a plunger that defines fewer slots (e.g., assuming that the slots in each plunger are of the same size and shape) due to the larger effective orifice size of the plunger as the traveler is displaced from the valve seat 206.

In the illustrated embodiment, the traveler 400 is removably mounted within the housing assembly 202. More specifically, the traveler 400 is removably mounted within the valve cap 218 (e.g., within the chamber or cavity 252 of the valve cap 218), and the traveler 400 may be removed from the housing assembly 202 or interchanged for another traveler (e.g., traveler 300, 500, or another suitable traveler) when the valve cap 218 is removed (e.g., unthreaded) from the valve body 216. Accordingly, the valve assembly 200 facilities easy customization of the flow rate or variation in the flow rate of fluid 114 through the valve assembly 200 via interchangeable travelers 300, 400, 500 that define slot configurations tailored to a desired flow rate or variation in the flow rate of fluid 114 for a given pressure differential across the plunger or for a range of pressures at the inlet of the valve assembly, respectively.

In the illustrated embodiment, the valve assembly 200 also includes at least one spring 262 operably coupled to the traveler 204/300/400/500. The at least one spring 262 is operable to return the traveler 204/300/400/500 to the first position, after the traveler 204/300/400/500 when has been displaced to the second position. More specifically, the at least one spring 262 is a compression spring, and as the traveler 204/300/400/500 is displaced from the valve seat 206 (e.g., as the traveler 204/300/400/500 moves to the right in FIG. 4), a restorative force is generated by the at least one spring 262 to bias the traveler 204/300/400/500 back towards the first position. Generally, the at least one spring 262 engages the engagement surface 462 of the traveler 204/300/400/500 to bias the traveler 204/300/400/500 towards the first position.

In at least some embodiments, the at least one spring 262 may be sized and shaped such that the at least one spring 262 exerts a biasing force on the traveler 204/300/400/500 even when the traveler 400 is in the first position. That is, the at least one spring 262 may be operable to hold the traveler 204/300/400/500 in the first position until a threshold pressure differential across the plunger 207/306/406/506 is reached. The threshold pressure differential is defined as a pressure differential that is required to overcome the biasing force of the at least one spring 262 and to displace the traveler 204/300/400/500 from the first position (e.g., move the traveler 204/300/400/500 to the right in FIG. 4) and open the valve assembly 200.

In other embodiments, the valve assembly 200 does not include a seal. For example, in some embodiments, the valve assembly 200 includes an external check valve (not shown) downstream of the traveler 204, such that specific sealing components (e.g., the spring 262) are not needed.

In operation, the traveler 204/300/400/500 moves within the housing assembly 202 as fluid flows through the valve assembly 200. Generally, the traveler 204/300/400/500 is moved within the chamber 252 by a drag force created by fluid pushing on and/or flowing around the traveler 204/300/400/500. The drag force is proportional to the pressure differential across the plunger 207/306/406/506. The drag force generally includes a pressure component and frictional component. The pressure component of the drag force acts on the plunger due to fluid pushing on the plunger 207/306/406/506 (e.g., on the base surface 418). The frictional component of the drag force acts on the plunger once the traveler 204/300/400/500 is displaced from the valve seat 206 and fluid begins to flow from the chamber 228 to the chamber 252. Before the traveler 204/300/400/500 is displaced from the valve seat 206, there is no frictional component of the drag force acting on the traveler 204/300/400/500 (e.g., only the pressure component of the drag force may exist).

The traveler 204/300/400/500 will be moved by the fluid and settle at a position where the drag force from the fluid and the opposing forces acting on the traveler 204/300/400/500 (e.g., gravity, biasing elements, etc.) are at equilibrium. In the example embodiment, a biasing force exerted on the traveler 204/300/400/500 by the at least one spring 262 is the only substantial force opposing the drag force, although other embodiments may include additional opposing forces, such as an opposing force resulting from gravity (e.g., in a valve assembly 200 where the traveler 204/300/400/500 moves vertically up and down). In some embodiments, the at least one spring 262 is preloaded to maintain the traveler 204/300/400/500 in the first position. When the drag force due to the pressure differential across the plunger 207/306/406/506 exceeds a threshold (such as the biasing force exerted by the at least one spring 262 on the traveler 204/300/400/500) when the traveler 204/300/400/500 is in the first position, the drag force will cause the traveler 204/300/400/500 to displace from the valve seat 206 (e.g., move to the right in FIG. 4) and, thereby, open the valve assembly 200.

When the volumetric flow rate through the valve assembly 200 increases, the average fluid flow velocity within the chamber 252 will increase, exerting a greater drag force on the traveler 400. The increased drag force will cause the traveler 204/300/400/500 to displace further from the valve seat 206 (e.g., move to the right in FIG. 4) until the traveler 204/300/400/500 reaches a position at which the drag force is again in equilibrium with any opposing forces on the traveler 204/300/400/500. Similarly, when the volumetric flow rate of fluid through the chamber 252 decreases, the average fluid flow velocity within the chamber 252 will decrease, exerting a lower drag force on the traveler 204/300/400/500. The reduced drag force will cause the traveler 204/300/400/500 to displace towards the valve seat 206 (e.g., move to the left in FIG. 4) until the traveler 204/300/400/500 either (i) reaches a position at which the drag force is again in equilibrium with any opposing forces on the traveler 204/300/400/500 (e.g., the biasing force exerted by the at least one spring 262) or (ii) engages the valve seat 206.

In some embodiments of the valve assembly 200, the drag force needed to maintain the traveler 204/300/400/500 at a displacement amount within the cavity or chamber 252 is generally equal to the biasing force exerted by the at least one spring 262 on the traveler 204/300/400/500, and the biasing force may change as the at least one spring 262 is compressed or decompressed. Thus, for a traveler of a given configuration (e.g., shape, mass, surface finish, slot configuration, etc.), a spring of a given configuration (e.g., length, spring constant, response type, etc.), and a fluid with given fluid characteristics (e.g., mass density, drag coefficient) the fluid pressure at the inlet 208 of the valve assembly 200 needed to generate a drag force equal to the biasing force exerted by the at least one spring 262 on the traveler 204/300/400/500 when the at least one spring 262 is compressed a specific distance can be calculated using known relationships between spring compression and drag force (e.g., the drag equation).

In the illustrated embodiment, the at least one spring 262 is removably mounted within the housing assembly 202. More specifically, the at least one spring 262 is removably mounted within the valve cap 218 (e.g., within the chamber or cavity 252 of the valve cap 218), and the at least one spring 262 may be removed from the housing assembly 202 or interchanged for another spring 262 when the valve cap 218 is removed (e.g., unthreaded) from the valve body 216. The at least one spring 262 is positioned within the chamber 252 such that the at least one spring 262 engages the engagement surface 462 of the traveler (or the engagement surface 309 of the traveler 300).

In some embodiments, the flow rate of fluid 114 through the valve assembly 200 and/or the variation in flow rate of fluid 114 through the valve assembly 200 as the traveler 204/300/400/500 is displaced from the valve seat 206 may be dependent on at least one parameter of the at least one spring 262 (e.g., spring length, spring constant, linear vs. nonlinear response of the spring, etc.). That is, the displacement amount of the traveler 204/300/400/500 from the first position varies based on at least one parameter of the at least one spring 262.

The valve assembly 200 facilitates easy customization of the flow rate of fluid 114 through the valve assembly 200 via interchangeable springs 262 that have parameters tailored to a desired flow rate of fluid 114 (e.g., at a given pressure different across the plunger and for a given plunger). For example, a spring 262 with a low spring constant may cause the displacement amount of the traveler 204/300/400/500 from the valve seat 206 to be greater than a spring 262 with a higher spring constant at a given pressure differential across the plunger (e.g., plunger 406) and for a given traveler (e.g., traveler 400).

Further, the valve assembly 200 facilitates easy customization of the variation in flow rate of fluid 114 through the valve assembly 200 as the traveler 204/300/400/500 is displaced from the valve seat 206 via interchangeable springs 262 that have parameters tailored to a desired variation in flow rate of fluid 114 through the valve assembly 200 as the traveler 204/300/400/500 is displaced from the valve seat 206. For example, a spring 262 with a linear response may provide a different variation in flow rate of fluid 114 through the valve assembly 200 as the traveler 204/300/400/500 is displaced from the valve seat 206 than a spring 262 with a non-linear response over a given range of pressure differentials across the plunger (e.g., plunger 406) and for a given traveler (e.g., traveler 400) .

Additionally, a fluid pressure at the inlet 208 of the housing assembly 202 may also control the flow rate of fluid 114 through the valve assembly 200. For example, a higher fluid pressure at the inlet 208 may result in a greater pressure differential across the plunger, a greater displacement amount of the traveler 204/300/400/500 from the valve seat 206 (assuming that the fluid pressures at the inlet 208 cause a pressure differential across the plunger 207/306/406/506 that is greater than a threshold pressure differential), and/or a higher flow rate of fluid through the valve assembly 200.

Accordingly, in the illustrated embodiment, the flow rate of fluid 114 through the valve assembly 200 may be controlled by at least one of a number of slots (e.g., slots 312/412/512) defined in the plunger (e.g., the plunger 207/307/406/506), a size and shape of the slot(s), at least one parameter of the at least one spring 262, and/or a fluid pressure at the inlet 208 of the housing assembly 202. In other embodiments (e.g., when a different traveler is used in the valve assembly 200 and/or when a different spring is used in the valve assembly 200) the flow rate of fluid 114 through the valve assembly 200 may be controlled by parameters of the components (e.g., a traveler and/or a spring) used in the valve assembly 200 (e.g., the configuration and/or number of slots defined in the traveler, the spring constant and/or length and/or response type of the spring, etc.). In some embodiments, the flow rate of fluid 114 through the valve assembly 200 may be controlled by more than one or all of a number of slots 412 defined in the plunger 406, a size and shape of the at least one slot 412, at least one parameter of the at least one spring 262, and a fluid pressure at the inlet 208 of the housing assembly 202.

That is, the valve assembly 200 facilitates easy customization of the flow rate and variation in the flow rate of fluid 114 through the valve assembly 200 via interchangeable components (e.g., the interchangeable travelers 204, 300, 400, 500, the interchangeable at least one spring 262) and adjustable flow parameters (e.g., the fluid pressure at the inlet 208). Accordingly, a user may tailor the valve assembly 200 to a desired flow rate of fluid 114 through the valve assembly 200 at a given fluid pressure at the inlet 208 and/or the user may tailor the valve assembly 200 to a desired variation in flow rate of fluid 114 through the valve assembly 200 over a range of fluid pressures at the inlet 208 via the interchangeable components and/or via the adjustable fluid parameters.

In some embodiments, each of the plurality of valve assemblies 200 in the fluid application system 100 includes a traveler (e.g., traveler 204, 300, 400, 500) and at least one spring (e.g., at least one spring 262) in order to produce a desired flow rate in the corresponding dispensing tube 130 for a universal fluid pressure that is approximately the same at each inlet 208. That is, the fluid application system 100 is configured such that approximately the same fluid pressure exists at each inlet 208 of each valve assembly 200, and the traveler and at least one spring of each valve assembly 200 are chosen such that each valve assembly 200 outputs a respective desired flow rate of fluid 114 in the corresponding dispensing tube 130. Accordingly, different valve assemblies 200 within the fluid application system 100 may output different flow rates of fluid 114 in the corresponding dispensing tube 130 even though the fluid pressure at the inlet of each valve assembly 200 is approximately the same.

In some embodiments, components of the housing assembly 202 (e.g., the valve body 216, the valve cap 218, etc.) may be constructed of steel (e.g., stainless steel). In other embodiments, the components of the housing assembly 202 may be constructed of any suitable material that enables the valve assembly 200 to function as described herein.

In some embodiments, the traveler 204, 300, 400, 500 may be constructed of plastic and/or rubber. In other embodiments, the traveler 204, 300, 400, 500 may be constructed of any suitable material that enables the valve assembly 200 to function as described herein.

In certain fluid application systems, for example, fluid application systems that include an odd number of dispensing tubes 130 (e.g., 23 or 25), different flow rates of fluid 114 may need to be output in each of the dispensing tubes 130. For example, in a fluid application that includes twenty-three rows of dispensing tubes 130, the first and twenty-third rows of fluid dispensing tubes 130 (i.e., the outermost or leftmost and rightmost dispensing tubes 130) may require 1.5 times the flow rate of fluid to be output from the corresponding valve assemblies 200 than the other rows. Accordingly, the valve assemblies 200 that correspond to the first and twenty-third fluid dispensing tubes 130 may include a different traveler (e.g., traveler 500) and/or a different spring as compared to the other valve assemblies in the fluid application system 100 that enables the correct flow rate of fluid to be dispensed when a universal fluid pressure is applied at the inlet 208 of each valve assembly 200.

In another example, in a fluid application system that includes twenty-five rows of dispensing tubes 130, the first and twenty-fifth rows of fluid dispensing tubes 130 (i.e., the outermost or leftmost and rightmost dispensing tubes 130) may require 0.5 times the flow rate of fluid 114 to be output from the corresponding valve assemblies 200 than the other dispensing tubes 130. Accordingly, the valve assemblies 200 that correspond to the first and twenty-fifth fluid dispensing tubes may include a different traveler (e.g., traveler 300) and/or a different at least one spring compared to the other valve assemblies 200 in the fluid application system 100 that enables the correct flow rate of fluid to be dispensed when a universal fluid pressure is applied at the inlet 208 of each valve assembly 200.

Accordingly, in the above two examples, when a universal fluid pressure is applied at each inlet 208 of each valve assembly 200, the desired flow rate of fluid 114 is output from each valve assembly 200 into the corresponding dispensing tube 130.

In some embodiments, the flow rate of fluid output from each individual valve assembly 200 may specifically be targeted to compensate for unique downstream non-linear pressure and flow restrictions (e.g., within the corresponding dispensing tube 130) such that the intended flow rate is emitted from each respective dispensing tube 130 throughout the entire range of universal inlet pressures (e.g., in a linear fashion), and such that the total flow emitted from the dispensing tubes 130 achieves a universal flow target (e.g., amount of fluid dispensed) over a wider range of flow rates or over fluid pressures at the inlet 208 of each valve assembly 200. Some examples of non-linear pressure and flow restrictions include, for example and without limitation, sharp bends in the dispensing line and blockages in the dispensing line. Achieving a universal flow target may facilitate compliance with regulations (e.g., government regulation) on the amount of fluid that is allowed to be dispensed over a given area (e.g., a field).

In some embodiments, the valve assemblies 200 may be tailored to emit a specific flow rate of fluid depending on the desired speed of a motorized vehicle (e.g., vehicle 102) that propels the fluid application system 100. For example, the valve assemblies 200 may use a combination of travelers (e.g., travelers 204, 300, 400, 500), springs (e.g., spring 262), and/or inlet pressures, such that a flow rate of fluid emitted from the valve assemblies 200 into the corresponding dispensing tubes 130 is higher when the speed at which the fluid application system 100 is propelled is higher.

In some embodiments, the valve assemblies 200 may be tailored to emit a specific flow rate of fluid depending on the time of year (e.g., spring, fall) in which the fluid application system 100 is used. For example, the valve assemblies 200 may use a combination of travelers (e.g., travelers 204, 300, 400, 500), springs (e.g., spring 262), and/or inlet pressures such that a flow rate of fluid emitted from the valve assemblies 200 into the corresponding dispensing tubes 130 is higher when the fluid application system 100 is used in the spring than in the fall.

In some embodiments, the fluid application system 100 may be tailored to handle a specific type of fluid 114. For example, the fluid application system 100 may be tailored to handle anhydrous ammonia, which is difficult to meter and distribute accurately in a semi-gaseous state. In such an embodiment, the valve assemblies 200 may use a combination of travelers (e.g., travelers 204, 300, 400, 500), springs (e.g., spring 262), and/or inlet pressures, such that the pressure of anhydrous ammonia throughout the valve assembly 200 is above a saturation pressure and such that the anhydrous ammonia remains in a liquid state throughout the valve assemblies 200, thereby enabling more accurate metering and distribution of the anhydrous ammonia from the valve assemblies 200. The valve assemblies 200 may be constructed of materials (e.g., stainless steel or aluminum) suitable to withstand the increased pressure of the anhydrous ammonia within the valve assemblies 200.

With reference to FIG. 4, the valve assembly also includes a sensor assembly 600 connected to the controller 142. The sensor assembly 600 is configured to detect a position of the traveler 204/300/400/500 within the cavity or chamber 252. The sensor assembly 600 includes at least one magnet 602 and, in the example embodiment, also includes traveler position detection circuitry implemented on a printed circuit board (PCB) assembly 604. The at least one magnet 602 is positioned within the traveler 204 and moves with the traveler 204. That is, the traveler 204/300/400/500 may include the at least one magnet 602. The sensor assembly 600 is operable to determine a flow rate of fluid through the valve assembly 200 via tracking the position of the at least one magnet 602 positioned within the traveler 204/300/400/500 as further described herein.

In some embodiments, the at least one magnet 602 is integrally formed with the traveler 204/300/400/500 (e.g., with the body of the traveler). In some embodiments, the at least one magnet 602 may be pressed or potted within the traveler 204/300/400/500. In some embodiments, for example, the traveler 204/300/400/500 is constructed of magnetic materials, including, for example and without limitation, ferromagnetic materials, iron alloys, steel alloys, ferrite, and combinations thereof. In further embodiments, the at least one magnet 602 is axially magnetized, i.e., the poles of the at least one magnet 602 are spaced axially. In some embodiments, the at least one magnet 602 may be embedded in or otherwise attached to a non-magnetic or magnetic body.

The PCB assembly 604 includes at least one sensor 606 that is operable to detect a position of the at least one magnet 602 relative thereto. The PCB assembly 604 is configured to determine a position of the traveler 204/300/400/500 based on the position of the at least one magnet 602. That is, the PCB assembly 604 determines a position of the at least one magnet 602 relative to the sensor 606, and the PCB assembly 604 determines the position of the traveler 204/300/400/500 based on the position of the at least one magnet 602 relative to the sensor 606. The PCB assembly 604 is positioned on the housing assembly 202 such that the sensor 606 is affected by the at least one magnet 602 as the traveler 204/300/400/500 moves within the housing assembly 202 (e.g., within at least one cavity or chamber 228, 230, 254 of the housing assembly 202). In the example embodiment, the PCB assembly 604 is positioned within the chamber or cavity 254 of the valve cap 218. In other embodiments, the PCB assembly 604 may be placed in any suitable location that enables the valve assembly 200 to function as described herein.

The at least one magnet 602 (shown in FIG. 4) may be any magnet that enables the valve assembly 200 and fluid application system 100 to operate as described herein. In the example embodiment, the at least one magnet 602 generates or produces a magnetic field that activates or otherwise affects the sensor 606. In some embodiments, the magnet 602 may produce a magnetic field with a magnetic flux density (e.g., a surface density) of between about 3,000 Gauss (G) and about 30,000 G, between about 5,000 G and about 20,000 G, between about 5,000 G and about 15,000 G, between about 10,000 G and about 30,000 G, between about 10,000 G and about 20,000 G, or between about 10,000 G and about 15,000 G. In further embodiments, the magnetization of the at least one magnet 602 and, therefore, the magnetic field of the at least one magnet 602 may be adjusted. For example, the at least one magnet 602 may be magnetized or demagnetized to adjust the magnetic flux of the magnetic field.

In the example embodiment, the sensor assembly 600 determines the position of the traveler 204/300/400/500 based on a magnetic interaction between the sensor 606 and the magnetic properties of the at least one magnet 602 (e.g., magnetic field and/or magnetic flux density). In addition, in some embodiments, the sensor assembly 600 is configured to output a traveler position signal associated with a position of the traveler 204/300/400/500 within the cavity or chamber 252 of the valve cap 218 (e.g., to controller 142).

The at least one sensor 606 in the example embodiment is a magnetic sensor (e.g., a magnetically-activated or -affected sensor) that is responsive to or affected by a magnetic field produced by the at least one magnet 602 of the traveler 204/300/400/500. One example of a suitable magnetic sensor is a Hall effect sensor. In embodiments that utilize a Hall effect sensor, the sensor 606 provides feedback based on a detected magnetic flux density, which changes as the traveler 204/300/400/500 (and magnet 602) get closer and further away. This interaction between the magnet 602 and sensor 606 is (typically) non-linear by nature. The Hall effect sensor 606 provides or outputs a voltage signal that varies based on the position of the traveler 204/300/400/500 relative to the sensor 606. In such an embodiment, the sensor 606 may produce a measurable electrical characteristic (e.g., output voltage, current, resistance) that varies based on the strength and/or polarity of the magnetic field generated by the magnet 602 and, therefore, the position of the traveler 204/300/400/500. A change in the measured electrical characteristic may be related to the distance between the traveler 204/300/400/500 and the sensor 606.

Accordingly, the position of the traveler 204/300/400/500 may be determined based on a magnitude of change in the measured electrical characteristic of the sensor 606. For example, a change in the measured output voltage of the sensor 606 of +/- 1.5 V may indicate that the traveler 204/300/400/500 has moved 2 mm away from the sensor 606. In some embodiments, a detectable change in the measured electrical characteristic of the sensor 606 may be about 1 millivolt (mV) or greater. In alternative embodiments, the valve assembly 200 may include any suitable type of sensor that enables the sensor assembly 600 and the valve assembly 200 to function as described herein. In some embodiments, for example, the sensor 606 is a Hall effect switch. In yet other embodiments, the sensor assembly 600 may include one or more sensing devices whose electrical characteristics (e.g., resistance) vary based on the presence of a magnetic field. In some embodiments, for example, the sensor assembly 600 includes one or more magneto-resistive sensing devices that have magnetically-variable resistances. Moreover, although a single sensor 606 is shown and referenced herein, it should be understood that the sensor assembly 600 may include more than one sensor (e.g., two, three, four, five, six, or more sensors).

In alternative embodiments, the sensor assembly 600 determines the position of the traveler 204/300/400/500 in any manner that enables the valve assembly 200 and fluid application system 100 to operate as described herein. For example, in some embodiments, the traveler 204/300/400/500 is non-magnetic, and the sensor assembly 600 is configured to detect the position of the traveler 204/300/400/500 via non-magnetic means, such as capacitive sensors, inductive sensors, and combinations thereof.

In suitable embodiments, the position of the traveler 204/300/400/500 may be used to determine values relating to fluid flow. For example, the volumetric flow rate through the valve assembly 200 can be determined (e.g., by controller 142) based on the displacement amount of the traveler 204/300/400/500 from the valve seat 206 (e.g., the displacement amount of the seating surface 452 from the valve seat 206, based on the determined position of the traveler 400) and the configuration of slots (e.g., slots 412) in the plunger (e.g., plunger 406), which may be input into controller 142 via user interface 144. In one embodiment, for example, the volumetric flow rate is determined (e.g., by controller 142) using a look up table including traveler displacement amounts and corresponding volumetric flow rates for a specific slot configuration of the traveler (e.g., traveler 204, 300, 400, 500) and/or for a specific spring (e.g., spring 262) used in the valve assembly 200. In some embodiments, calculations of the velocity and the flow rate can be combined into a single algorithm that is programmed into the controller 142. In alternative embodiments, the volumetric flow rate may be calculated in any manner that enables the fluid application system 100 to operate as described herein.

Additionally or alternatively, the position of the traveler 204/300/400/500 may be used to present information other than volumetric flow rate to a user of the system 100. In some embodiments, for example, the controller 142 is configured to output an alert or alarm to a user of the system 100 in response to detecting a fluid flow anomaly or irregularity (e.g., flow blockages or restriction) in the system 100 based on a comparison of the displacement amounts (or corresponding output signals) of the travelers 204/300/400/500 from a plurality of valve assemblies 200. Moreover, in some embodiments, the controller 142 is configured to display the displacement amounts of one or more travelers 204 on a display device of the user interface 144. The displacement amounts of the traveler 204/300/400/500 of a valve assembly 200 and/or a flow rate through the valve assembly 200 may be compared to corresponding values for the other valve assemblies 200 (e.g., visually by an operator or electronically by controller 142) as an indicator of actual vs. expected performance without being individually calibrated (e.g., via electronics).

In some embodiments, the valve assembly 200 includes or is connected in fluid communication (e.g., in serial fluid communication) with a pulse-width modulated (PWM) valve (colloquially referred to as a pulsing nozzle or valve). In such embodiments, the sensor assembly 600 can be configured to detect individual pulses of the pulse-width modulated valve. For example, the inertia of the traveler 204/300/400/500 may affect the position of the traveler 204/300/400/500 within the cavity or chamber 252, and the sensor assembly 600 can detect the dynamic displacement or "jump distance" of the traveler 204/300/400/500 resulting from fluctuations in fluid flow through the valve assembly 200 caused by the pulsing valves or nozzles. The configuration of the valve assembly 200 and the sensor assembly 600 allows detection of individual pulses of PWM valves operating at frequencies up to, for example, 5 hertz (Hz), 10 Hz, 20 Hz, 25 Hz, 30 Hz, or more. For example, embodiments of the valve assembly 200 can include relatively low mass travelers 204/300/400/500 and/or relatively stiff springs such that the traveler 204/300/400/500 is highly responsive to even small changes in fluid flow or pressure differential across the traveler 204. Moreover, the sensor assembly 600, described in greater detail herein, is capable of detecting even small changes in the position of the traveler 204/300/400/500, and thus capable of detecting individual pulses of PWM valves.

In the example embodiment, the valve assembly 200 is operable to detect the individual pulses at a range of flow rates of the fluid 114 through the valve assembly 200. For example, the sensor assembly 600 (and/or the controller 142) is configured to detect individual fluid pulses for the fluid 114 flowing at a flow rate of up to 5 gallons per minute (GPM), such as 0.5 GPM, 0.8 GPM, 1 GPM, 2 GPM, 3 GPM, 4 GPM, or any other flow rate up to 5 GPM.

Moreover, the detected position of the traveler 204/300/400/500 throughout operation of the pulsing valve can be used (e.g., by controller 142) to determine the flow rate during each pulse and the pressure differential across the valve assembly 200. The signal can also be integrated over time (e.g., by controller 142) to determine the overall flow rate of the through the valve assembly 200 independent of the device driving the PWM valve. This information can be particularly useful in that it can provide a redundant performance confirmation of the PWM valve and can be further used to generate a map of as-applied product.

In some embodiments, the fluid flow through the valve assembly 200 and the path of the traveler 204/300/400/500 may be estimated using predictive models and/or anticipated flow changes. In such embodiments, the controller 142 may be configured to compare the estimations to the changes in the state of the sensor 606, and/or the determined position of the traveler 204/300/400/500 (e.g., when the traveler is not affecting the sensors). Based on the comparisons, the controller 142 may determine if the valve assembly 200 is operating as predicted.

In reference to FIG. 4, the sensor assembly 600 is connected to the controller 142 (e.g., via wired or wireless connection) such that the sensor assembly 600 can send or output signals to the controller 142. The signals can include information relating to the determined states of the sensor 606 and/or the position of the traveler 204/300/400/500. In some embodiments, the sensor assembly 600 further includes a wireless device to enable the sensor assembly 600 to communicate wirelessly with the controller 142 and/or other remote devices (not shown). In some embodiments, the sensor assembly 600 includes a battery (not shown) to power the wireless device. In some embodiments, the sensor assembly 600 may communicate with the controller 142 and other components through a controller area network (CAN).

The controller 142 may perform one or more functions or calculations based on the information received from the sensor assembly 600. For example, the controller 142 may execute an algorithm to determine the volumetric flow rate through the cavity or chamber 252 (or through the valve assembly 200) based on the detected or determined position of the traveler 204 within the cavity or chamber 252, the drag force of the fluid, the fluid flow velocity through the cavity or chamber 252, the biasing force exerted by the at least one spring 262 on the traveler 204/300/400/500, the configuration of slots (e.g., slots 312, 412, 512) defined in the traveler 204/300/400/500, and/or the fluid pressure at the inlet 208 of the housing assembly 202. The controller 142 may generate a value for the volumetric flow rate in units of gallons per minute (gpm), or any other suitable units for measuring volumetric flow rate. In other embodiments, the controller 142 may receive a flow rate from the sensor assembly 600 that is determined by sensor assembly 600. In yet other embodiments, the controller 142 may compare the displacement amounts of travelers 204 (or corresponding output signals from sensor assemblies 600) from a plurality of valve assemblies 200 to detect fluid flow anomalies or irregularities (e.g., blockages, broken lines, restrictions, etc.) in the system 100. In such embodiments, the controller 142 may output an alert or alarm to a user of the system 100 in response to detecting a fluid flow anomaly or irregularity.

Information and data collected and/or determined by sensor assembly 600 and controller 142 may be stored on a suitable local memory device (e.g., included or connected to controller 142). Additionally or alternatively, such information and data may be stored or uploaded (e.g., via a suitable wired or wireless connection) to a remote memory or storage device (e.g., a cloud-based server or data storage service).

While various functions, calculations, and/or determinations are described herein as being performed by the sensor assembly 600 and/or the controller 142, it should be understood that such functions, calculations, and/or determinations may be performed or carried out by the sensor assembly 600, the controller 142, or some combination thereof. Moreover, aspects of the sensor assembly 600 may be included or integrated in the controller 142 and vice-versa, and the sensor assembly 600 and the controller 142 may be collectively referred to herein as a "controller" or "control system".

Although the sensor assemblies described herein are described with reference to a particular valve configuration (i.e., valve assembly 200), it should be understood that the sensor assemblies of the present disclosure are not limited to implementation on the specific valve assemblies shown and described above. Rather, the sensor assemblies described herein (e.g., sensor assembly 600) may be implemented on any suitable fluid valve or fitting having a component that moves in response to changes in fluid flow or pressure differentials. In another embodiment, for example, the sensor assembly 600 may be implemented in a diaphragm check valve that includes a diaphragm or pressure membrane that moves or deflects in response to changes in pressure exerted on a face of the diaphragm. In this embodiment, a back side of the diaphragm (i.e., the side of the diaphragm opposite to the diaphragm face exposed to fluid flow/pressure) is sealed off or isolated from fluid flow, as is a cavity defined behind the diaphragm. The cavity is vented to atmosphere, and a spring within the cavity exerts a biasing force on the back side of the diaphragm. In such embodiments, the one or more magnets 602 of sensor assembly 600 may be connected to the back side of the diaphragm (e.g., via a suitable plunger) such that the magnet 602 is moved or displaced as the diaphragm deflects in response to changes in fluid flow or pressure differentials across the diaphragm check valve. The sensor 606 may be fixed to a housing of the diaphragm check valve and positioned to detect a position of the magnet 602 and changes in the position of the magnet 602 as the diaphragm moves or deflects. In such embodiments, the detected position of the magnet 602 may not be directly proportional to the flow rate through the diaphragm check valve, unlike the valve assembly 200 described above. However, such embodiments may provide a relatively easy implementation of the sensor assembly 600, while still providing useful diagnostic information based on the detected position of the magnet 602, such as flow status and faults in the fluid application system (e.g., valves that are stuck in an open or closed position, clogged outlets, etc.).

In particular, turning to FIGS. 21-23, the fluid application system 100 including a three-way valve assembly 700 is depicted. The three-way valve assembly 700 may be similar in many regards to the valve assembly 200 described herein, and any description of the valve assembly 200 may apply to the three-way valve assembly 700.

Like the valve assembly 200, the three-way valve assembly 700 is fluidly coupled to the storage tank 104 through, in downstream succession, the fluid line 120, the distribution manifold 106, and the supply lines 124. In addition, the three-way valve assembly 700 is fluidly coupled to the storage tank 104 through a return hose 702. In some embodiments, the return line 702 couples the three-way valve assembly 700 directly to the storage tank 104, whereas in other embodiment, the return line 702 is fluidly coupled to the storage tank 104 through a return manifold, one or more valves, one or more other fluid transport devices such as a pump, and/or any additional fluid flow management components (not shown).

Like the valve assembly 200, the three-way valve assembly 700 regulates fluid flow through a housing assembly 704 and into a respective dispensing tube 130 for injecting the fluid into the soil. In other embodiments, a three-way valve assembly may control fluid flow to a plurality of dispensing tubes or dispensing devices. Moreover, in some embodiments, the three-way valve assemblies 700 include a pulse-width modulated valve, such as a direct acting solenoid valve. Moreover, in some embodiments, the three-way valve assemblies 700 include spray nozzles or orifices configured to produce a desired spray pattern. In some embodiments, the three-way valve assembly 700 includes at least one quick connect (e.g., push-to-connect to a twist and lock quick connect) that is operable to connect the supply line 124, the return line 702, and/or the dispensing tube 130 to the three-way valve assembly 700. The housing assembly 704 also defines a plurality of fastener holes or openings (not specifically shown) that may receive corresponding fasteners 705 (e.g., screws, bolts, lugs, etc.) that may facilitate mounting or otherwise coupling the housing assembly to another structure (e.g., to boom 140, shown in FIGS. 1-3) .

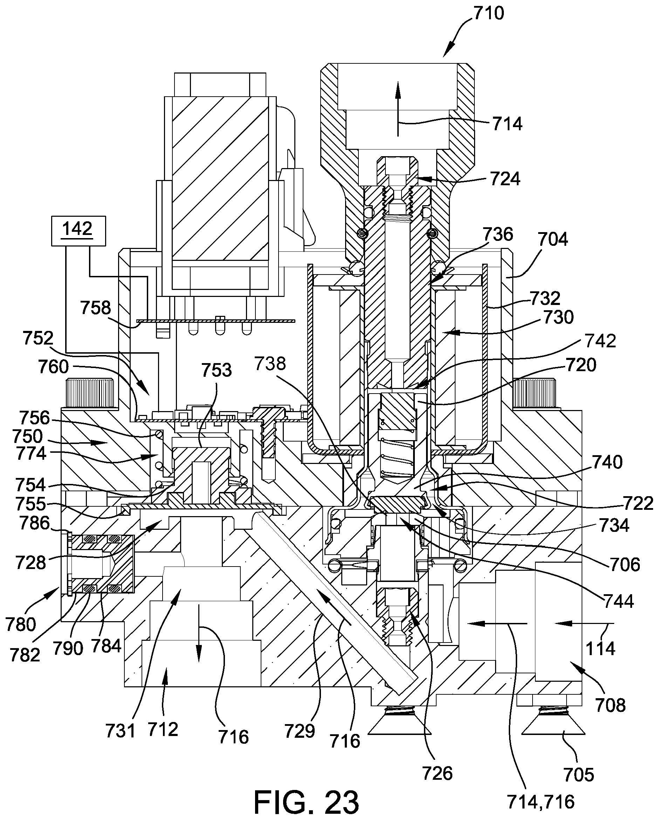

With reference to FIG. 23, the housing assembly 704 of the three-way valve assembly 700 defines an inlet 708, a return outlet 710, and a dispensing outlet 712. The housing assembly 704 defines a first, return flow path 714 extending from the inlet 708 to the return outlet 710 and a second, dispensing flow path 716 extending from the inlet 708 to the dispensing outlet 712. Although the return outlet 710 is illustrated as extending vertically (with respect to the orientation of FIG. 23), the return outlet 710 may be otherwise oriented, such as laterally (e.g., parallel to the inlet 708) or at an oblique angle.

In the example embodiment, the housing assembly 704 further defines, along the return flow path 714, at least one cavity or chamber, including a first chamber 722. The three-way valve assembly 700 further includes a second chamber 724 positioned downstream of the first chamber 722, further defining the return flow path 714. A third chamber 726 is positioned downstream of the first valve 730, further defining the dispensing flow path 716. The housing assembly 704 also defines, downstream of the third chamber 726 along the dispensing flow path 716, at least one cavity or chamber, including a fourth chamber 728. A first channel 729 defined in the housing assembly 704 fluidly couples the third chamber 726 to the fourth chamber 728, and a second channel 731 defined in the housing assembly 704 fluidly couples the fourth chamber 728 to the dispensing outlet 712. In the example embodiment, the second chamber 724 and the third chamber 726 are separate components that are formed (e.g., machined) and are coupled within the housing assembly 704 to define the flow paths 714, 716 of the three-way valve assembly 700. In other embodiments, the housing assembly 704 may define the second chamber 724 and/or the third chamber 726.

The three-way valve assembly 700 further includes at least one printed circuit board (PCB) coupled to the housing assembly 704 and communicatively coupled via a wired or wireless connection to the controller 142. In the example embodiment, the three-way valve assembly 700 includes a first PCB 758 and a second PCB 760, the functionality of which is described further herein. In other embodiments, the first and second PCBs 758, 760 may be combined into a single PCB.

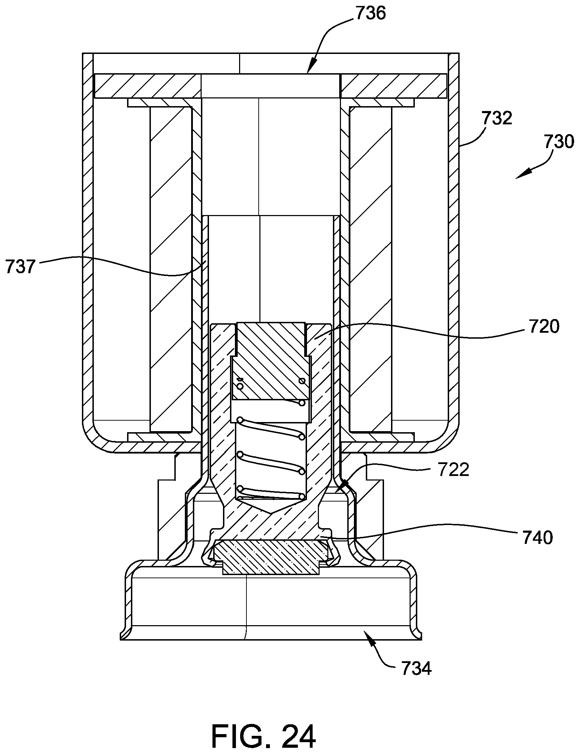

With reference to FIGS. 23 and 24, the three-way valve assembly 700 includes a first valve 730 retained in the housing assembly 704. The first valve 730, in operation, controls whether fluid flows along the return flow path 714 and/or the dispensing flow path 716. The first valve 730 includes a first valve body 732 extending from an inlet end 734 to an outlet end 736. An interior wall 737 (see FIG. 24) extends through the first valve body 732 between the inlet end 734 and the outlet end 736, the interior wall 737 facilitating directing fluid 114 to flow from the inlet end 734 to the outlet end 736 when fluid 114 flows through the first valve body 732. The first valve body 732 defines a valve seat 706 having an aperture 738 extending therethrough (see FIG. 23). The first valve 730 defines a first or return orifice 742 and a second orifice 744.

The first valve 730 further includes a traveler 720 configured to travel between a first position (as shown in FIG. 23) and a second position (not shown) within the first valve body 732. In some embodiments, the traveler 720 is similar to or includes any of the example travelers 204, 300, 400, or 500 described elsewhere herein or may include any other suitable traveler such that the first valve 730 and/or the three-way valve assembly 700 functions as described herein. In the example embodiment, the traveler 720 is an electrically actuated traveler and includes a plunger 740. The traveler 720 is displaceable between the first position, in which the plunger 740 engages the valve seat 706, and the second position (not shown), in which the plunger 740 is displaced from the valve seat 706.

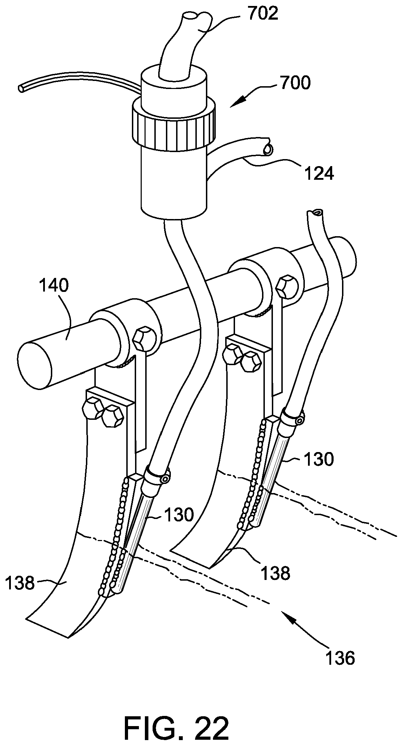

When the traveler 720 is in the first position, fluid flows along the return flow path 714. Specifically, fluid 114 flows from the supply line 124, through the housing inlet 708, and into the first valve inlet 734 to the first chamber 722 at an input flow rate. Because the plunger 740 is engaged with the valve seat 706, the fluid 114 is prevented from flowing through the aperture 738. The fluid 114 travels from the first chamber 722, through the first valve body 732 around the traveler 720 and into the first orifice 742, towards the first valve outlet 736, through the second chamber 724, and through the return outlet 710 (into the return line 702, shown in FIGS. 21 and 22) at an output flow rate, which corresponds to the input flow rate.

When the traveler 720 is in the second position, fluid 114 flows from the supply line 124, through the housing inlet 708, and into the first valve inlet 734 to the first chamber 722 at the input flow rate. Because the plunger 740 is displaced from the valve seat 706, at least a portion of the fluid 114 flows through the aperture 738 and into the second orifice 744, through the third chamber 726, then through the channel 729 to the fourth chamber 728, and finally through the dispensing outlet 712 (into the dispensing line 130, shown in FIGS. 21 and 22) at the output flow rate, which corresponds to the input flow rate.

The three-way valve assembly 700 is considered a balanced three-way valve assembly in that the output flow along the return flow path 714 (from the inlet 708 to the return outlet 710) matches or is balanced with the output flow along the dispensing flow path 716 (from the inlet to the dispensing outlet 712), where the output flow is any desired or selected outflow based on a particular application or implementation of the fluid application system 100. The three-way valve assembly 700 may be implemented in a fluid application system 100 that delivers a pulsed fluid flow. The provision of the return flow path 714 enables the fluid application system 100 to provide a continuous, output path-agnostic input flow, regardless of the desired or selected pulse characteristics (e.g., flow rate, duty cycle, frequency, etc.), because the fluid has an output flow path (i.e., one of flow path 714 or 716) along which to travel whether the fluid is being dispensed onto the soil or not.

To accomplish this balance, the three-way valve assembly 700 includes the first orifice 742 and the second orifice 744. These orifices 742, 744 may serve to balance flow through the first valve 730 at duty cycles other than 100%. In such instances, a portion of the fluid 114 flows through the return flow path 714 and is accommodated by the first orifice 742, and another portion of the fluid 114 flows through the dispensing flow path 716 and is accommodated by the second orifice 744. For example, if the three-way valve assembly 700 is controlled to operate at a 70% duty cycle pulsed operation, 700 of the input fluid flow is directed to flow through the dispensing fluid path 716, and the remaining 30% if the input fluid flow is directed through the return fluid path 714. In some instances, the second position of the traveler 720 is variable depending on the selected duty cycle, to facilitate the division of flow between the flow paths 714, 716.

In addition, the volume of the second chamber 724 (also referred to as the size of the second chamber 724) is the same as or matched to the volume of (the size of) the third chamber 726. The size of the chambers 724, 726 may be defined by machining the chambers 724, 726 based on a user-selected fluid application rate. The chambers 724, 726 may be selectively modified to adjust the user-selected fluid application rate. For example, if a reduced flow rate, less than a maximum flow rate of the three-way valve assembly 700, is desired, the second and third chambers 724, 726 may be reduced in size.

In the example embodiment, the first valve 730 is controlled based on control signals received at the first PCB 758 from the controller 142. When the first valve 730 is not energized or is de-energized (e.g., in response to a first control signal from the controller 142), the traveler 720 is controlled to translate to the first position. That is, the "default" position of the traveler 720 may be the first position, such that fluid flows along the return path 714 by default. When the first valve 730 is energized (e.g., in response to a second control signal from the controller 142), the traveler 720 is controlled to translate to the second position.

The three-way valve assembly 700 also includes a diaphragm drip check 750. The diaphragm drip check 750 is downstream of the first valve 730 with respect to the dispensing flow path 716 and occupies the fourth chamber 728. The diaphragm drip check 750, in operation, senses fluid flow downstream of the first valve 730 and may therefore be referred to as a flow sensor.

The diaphragm drip check 750 includes a sensor assembly 752, a plunger 754, a diaphragm 772, and a compression spring 756. The sensor assembly 752 may be substantially similar to the sensor assembly 600 described herein, and any description of the sensor assembly 600 may apply equally to the sensor assembly 752. The sensor assembly 752 is configured to detect a displacement of the plunger 754 within a sensing chamber 774 (see FIG. 23). The sensor assembly 752 includes at least one magnet 778 and, in the example embodiment, also includes displacement detection circuitry implemented on the second PCB 760. The at least one magnet 778 is positioned within the plunger 754 and moves with the plunger 754. The sensor assembly 752 is operable to determine a flow rate of fluid through the three-way valve assembly 700 - specifically, along the dispensing flow path 716 - by tracking the position of the at least one magnet 778 positioned within the plunger 754 as further described herein.

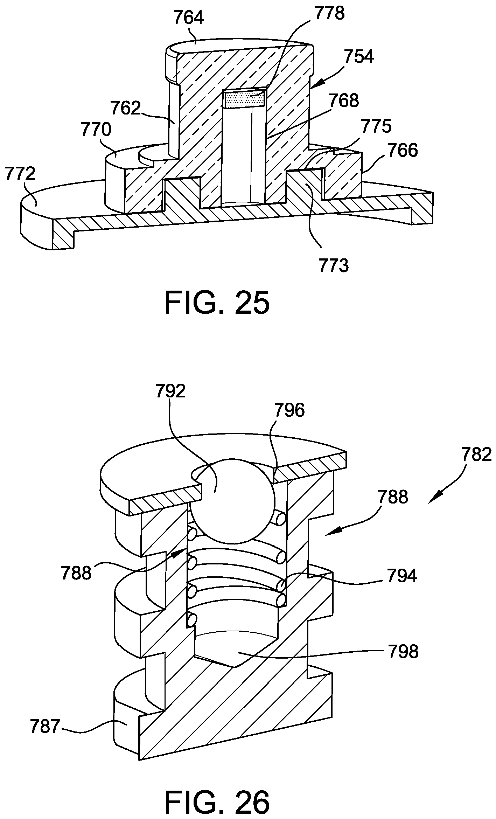

With reference to FIGS. 23 and 25, the plunger 754 includes a neck 762 extending between a head 764 and a flange 766. A closed shaft 768 extends from the flange 766 into the neck 762. The flange 766 defines an engagement surface 770 operable to engage the compression spring 756.

The diaphragm 772 is operatively coupled to the plunger 754. In the illustrated embodiment, the diaphragm 772 includes an annular extension 773 that extends towards the plunger 754 (upwards, with respect to the view of FIG. 25). The extension 773 is received within a corresponding annular groove 775 of the plunger 754. In this way, deflection of the diaphragm 772 causes corresponding displacement or translation of the plunger 754 away from an initial position of the plunger (e.g., the position shown in FIG. 23). The compression spring 756 provides a counteractive force against the plunger 754, biasing the plunger 754 towards its initial position. The diaphragm 772 is further operable to seal the fourth chamber 728 from the sensing chamber 774.

The magnet 778 is housed within the plunger 754. In the example embodiment, the magnet 778 is coupled to an internal surface of the plunger 754 within the shaft 768. In other embodiments, the magnet 778 may be located elsewhere, such as within the head 764. In some embodiments, the at least one magnet 778 is integrally formed with the diaphragm 754. In some embodiments, the at least one magnet 778 may be pressed or potted within the plunger 754. In some embodiments, for example, the plunger 754 is constructed of magnetic materials, including, for example and without limitation, ferromagnetic materials, iron alloys, steel alloys, ferrite, and combinations thereof. In further embodiments, the at least one magnet 778 is axially magnetized, i.e., the poles of the at least one magnet 778 are spaced axially. In some embodiments, the at least one magnet 778 may be embedded in or otherwise attached to a non-magnetic or magnetic body.

In operation, as fluid 114 flows from the channel 729, through the fourth chamber 728 and out through the dispensing outlet 712, the fluid 114 engages a bottom surface of the diaphragm 772 (that is, a surface opposite to the plunger 754) and exerts an applied force on the diaphragm 772 (in the upward direction, with respect to the orientation of FIG. 23). This applied force deflects diaphragm 772 (also in the upwards direction). The deflection of the diaphragm 772 is translated into corresponding displacement of the plunger 754 (also in the upward direction). The deflection of the diaphragm 772, and the corresponding displacement of the plunger 754, translates the magnet 778 towards the second PCB 760, which includes at least one sensing component or sensor 753 operable to detect a position of the magnet 778 relative thereto. That is, the sensor assembly 752 determines a position of the at least one magnet 778 relative to the sensor 753, which is used to determine the displacement of the plunger 754. The sensor assembly 752 generates sensor output representative of the displacement of the plunger 754, and transmits the sensor output to be processed by the controller 142 to calculate a flow rate of the fluid 114 through the fourth chamber 728.

In the example embodiment, the sensor assembly 752 determines the displacement of the plunger 754 based on a magnetic interaction between the sensor 753 and the magnetic properties of the at least one magnet 778 (e.g., magnetic field and/or magnetic flux density). In addition, in some embodiments, the sensor assembly 752 is configured to output a plunger displacement signal associated with a displacement of the plunger 754 within the sensing chamber 774 (e.g., to controller 142).

In the example embodiment, the three-way valve assembly 700 further includes a vacuum check valve 780. With reference to FIGS. 23 and 26, the vacuum check valve 780 includes a body 782 having a generally cylindrical shape. The body 782 is positioned in an aperture 784 that is defined in the housing assembly 704 and is retained in the aperture 784 by a clip 786, which prevents the body 782 from being dislodged from the housing assembly 704. The body 782 has notches 788 defined in a cylindrical side wall 787 thereof. Each notch 788 is operable to retain a respective O-ring 790 therein (see FIG. 23). O-rings 790 provide a sealing function to prevent fluid flow from the second channel 731 around the body 782.

The body 782 defines a chamber 788 therein, wherein the chamber 788 (and, therefore, the vacuum check valve 780) is generally open or exposed to the environment around the three-way valve assembly 700. The chamber 788 houses a ball-check valve including a ball 792 and a spring 794. The body 782 also includes a retainer or valve seat 796, which prevents the ball 792 from being dislodged from the chamber 788. The chamber 788 is further defined, at an end thereof that opposes the valve seat 796, by an end wall 798 that includes one or more perforations or apertures (not shown) extending therethrough. The spring 794 is operable to compress the ball 792 against the valve seat 796, the resulting engagement between the ball 792 and the valve seat 796 forming a seal between the chamber 788 and the environment. An amount of air, corresponding to a volume of the chamber 788, is sealed within the chamber 788.

In operation, the fluid application system 100 may be controlled or operated to provide a pulsed fluid output therefrom. During the "off" period of the duty cycle, a vacuum is generated within the second channel 731 as a result of the rapid shut off of fluid from the dispensing flow path 716. As a result of this vacuum, the air pressure of the environment overcomes the spring force of the spring 794 (approximately 1 pound per square inch (PSI), in the example embodiment). As a result, the ball 792 is displaced away from the valve seat 796, into the chamber 788. Air flows through the valve seat 796 and through the perforations in the end wall 798, such that an air bubble of a known volume is driven into the second channel 731 to disrupt the column of fluid therein. That is, the vacuum check valve 780 introduces the air bubble into the fluid flow through the dispensing flow path 716. The vacuum in the second channel 731 is eliminated, resulting in a rapid increase in pressure in the second channel 731 that prevents any further air flow through the end wall 798. The chamber 788 rapidly re-fills with air and the internal pressure within the chamber 788 overcomes the air pressure of the environment, forcing the ball 792 back into sealing engagement with the valve seat 796. When the flow re-starts, the fluid compresses the air bubble in the second channel 731 and draws the air bubble through the dispensing outlet 712. This process is repeated each time the fluid flow is pulsed on and off.

The presence of the air bubble in the fluid that flows through the dispensing line 130 may affect the volume of fluid that is dispensed onto the soil. In the example embodiment, the controller 142 is programmed to employ an algorithm that accommodates the effect of the air bubble on the resulting fluid flow and adjusts one or more parameters of the fluid flow (e.g., the flow rate) to ensure the fluid output through the dispensing line 130 and onto the soil has the desired characteristics.

The vacuum check valve 780 may provide numerous benefits, including reducing the effects of backwards fluid flow, known as water-hammering, with the second channel 731 during pulsed operation of the fluid application system 100, thereby reducing movement or turbulence of the dispensing line 130. The vacuum check valve 780 may facilitate reducing and/or stabilizing pressure of fluid flow output from the dispensing outlet 712 (into the dispensing line 130), and may facilitate improving the overall accuracy of fluid dispensing from the fluid application system 100. It has been discovered in the conception of the present disclosure that the illustrated arrangement of the diaphragm drip check 750, the vacuum check valve 780, and the dispensing outlet 712 in downstream succession realizes these benefits.

In some embodiments, the three-way valve assembly 700 includes another vacuum check valve (similar to the vacuum check valve 780) upstream of the return outlet 710. This additional vacuum check valve may provide similar benefits as described above, including reducing pressure or reducing or eliminating water hammering at the return outlet 710.

In some embodiments, such as where the three-way valve assembly 700 is incorporated in a fluid application system 100 that applies fluid in a continuous (e.g., 100% duty cycle) application pattern, the functionality of the vacuum check valve 780 may be unnecessary or undesirable. In such instance, the vacuum check valve 780 may be replaced by a plug.

In various embodiment of the three-way valve assembly 700, the at least one magnet 778 may be any magnet that enables the three-way valve assembly 700 and fluid application system 100 to operate as described herein. In the example embodiment, the at least one magnet 778 generates or produces a magnetic field that activates or otherwise affects the sensor(s) 753 of the second PCB 760. In some embodiments, the magnet 778 may produce a magnetic field (e.g., a magnetic surface field) with a magnetic flux density of between about 3,000 Gauss (G) and about 30,000 G, between about 5,000 G and about 20,000 G, between about 5,000 G and about 15,000 G, between about 10,000 G and about 30,000 G, between about 10,000 G and about 20,000 G, or between about 10,000 G and about 15,000 G, at the surface of the magnet 778. In further embodiments, the magnetization of the at least one magnet 778 and, therefore, the magnetic field of the at least one magnet 778 may be adjusted. For example, the at least one magnet 778 may be magnetized or demagnetized to adjust the magnetic flux of the magnetic field.

The at least one sensor 753 in the example embodiment is a magnetic sensor (e.g., a magnetically-activated or -affected sensor) that is responsive to or affected by a magnetic field produced by the at least one magnet 778 of the plunger 754. One example of a suitable magnetic sensor is a Hall effect sensor. In embodiments that utilize a Hall effect sensor, the sensor 753 provides feedback based on a detected magnetic flux density, which changes as the magnet 778 (and, thereby, the plunger 754) gets closer and further away. This interaction between the magnet 778 and sensor 753 is (typically) non-linear by nature. The Hall effect sensor 753 provides or outputs a voltage signal that varies based on the position of the magnet 778 (and, thereby, the plunger 754) relative to the sensor 753. In such an embodiment, the sensor 753 may produce a measurable electrical characteristic (e.g., output voltage, current, resistance) that varies based on the strength and/or polarity of the magnetic field generated by the magnet 778 and, therefore, the deflection of the diaphragm 772 and/or the displacement of the plunger 754. A change in the measured electrical characteristic may be related to the distance between the magnet 778 (and, thereby, the plunger 754) and the sensor 753.

In the example embodiment, the displacement of the plunger 754 may be determined based on a magnitude of change in the measured electrical characteristic of the sensor 753. For example, a change in the measured output voltage of the sensor 753 of +/- 1.5 V may indicate that the magnet 778, retained in the diaphragm 754, is moved 2 mm away from the sensor 753, whereas a steady state measured output voltage may indicate that the magnet 778 is in a non-moving state at a known distance (e.g., 2 mm) from the sensor 752. In some embodiments, a detectable change in the measured electrical characteristic of the sensor 753 may be about 1 millivolt (mV) or greater.

In alternative embodiments, the three-way valve assembly 700 may include any suitable type of sensor that enables the sensor assembly 752 and the three-way valve assembly 700 to function as described herein. In some embodiments, for example, the sensor 753 is a Hall effect switch. In yet other embodiments, the sensor assembly 752 may include one or more sensing devices whose electrical characteristics (e.g., resistance) vary based on the presence of a magnetic field. In some embodiments, for example, the sensor assembly 752 includes one or more magneto-resistive sensing devices that have magnetically-variable resistances. Moreover, although a single sensor 753 is shown and referenced herein, it should be understood that the sensor assembly 752 may include more than one sensor (e.g., two, three, four, five, six, or more sensors).

In alternative embodiments, the sensor assembly 752 determines the displacement of the plunger 754 in any manner that enables the three-way valve assembly 700 and fluid application system 100 to operate as described herein. For example, in some embodiments, the plunger 754 is non-magnetic, and the sensor assembly 752 is configured to detect the displacement of the plunger 754 via non-magnetic means, such as capacitive sensors, inductive sensors, and combinations thereof.

In suitable embodiments, the displacement of the plunger 754 may be used to determine values relating to fluid flow. For example, the volumetric flow rate along the dispensing flow path 716 through the three-way valve assembly 700 can be determined (e.g., by controller 142) based on the displacement of the plunger 754. In one embodiment, for example, the volumetric flow rate is determined (e.g., by controller 142) using a look up table including plunger displacement amounts and corresponding volumetric flow rates. In some embodiments, calculations of the velocity and the flow rate can be combined into a single algorithm that is programmed into the controller 142. In alternative embodiments, the volumetric flow rate may be calculated in any manner that enables the fluid application system 100 to operate as described herein.

Additionally or alternatively, the displacement of the plunger 754 may be used to present information other than volumetric flow rate to a user of the fluid application system 100. In some embodiments, for example, the controller 142 is configured to output an alert or alarm to a user of the system 100 in response to detecting a fluid flow anomaly or irregularity (e.g., flow blockages or restriction) in the system 100 based on a comparison of the displacement amounts (or corresponding output signals) related to the plungers 754 from a plurality of three-way valve assemblies 700. Moreover, in some embodiments, the controller 142 is configured to display the displacement amounts of one or more plungers 754 on a display device of the user interface 144. The displacement amount of the plunger 754 of a three-way valve assembly 700 and/or a flow rate through the three-way valve assembly 700 may be compared to corresponding values for the other three-way valve assemblies 700 (e.g., visually by an operator or electronically by controller 142) as an indicator of actual vs. expected performance without being individually calibrated (e.g., via electronics).

In some embodiments, the three-way valve assembly 700 includes or is connected in fluid communication (e.g., in serial fluid communication) with a pulse-width modulated (PWM) valve (colloquially referred to as a pulsing nozzle or valve). In such embodiments, the sensor assembly 752 can be configured to detect individual pulses of the pulse-width modulated valve. The configuration of the three-way valve assembly 700 and the sensor assembly 752 allows detection of individual pulses of PWM valves operating at frequencies up to, for example, 5 hertz (Hz), 10 Hz, 20 Hz, 25 Hz, 30 Hz, or more. Moreover, the sensor assembly 752 is capable of detecting even small deflections of the plunger 754, and thus is capable of detecting individual pulses of PWM valves.

In some embodiments, the detected displacement of the plunger 754 throughout operation of the pulsing valve can be used (e.g., by controller 142) to determine the flow rate during each pulse. The signal can also be integrated over time (e.g., by controller 142) to determine the overall flow rate along the dispensing flow path 716 through the three-way valve assembly 700 independent of the device driving the PWM valve. This information can be particularly useful in that it can provide a redundant performance confirmation of the PWM valve and can be further used to generate a map of as-applied product.

In some embodiments, the fluid flow through three-way valve assembly 700 and the deflection of the plunger 754 may be estimated using predictive models and/or anticipated flow changes. In such embodiments, the controller 142 may be configured to compare the estimations to the changes in the state of the sensor 753, and/or the determined deflection of the plunger 754. Based on the comparisons, the controller 142 may determine if the three-way valve assembly 700 is operating as predicted.

In reference to FIG. 23, the sensor assembly 752 is connected to the controller 142 (e.g., via wired or wireless connection with the second PCB 760) such that the sensor assembly 752 can send or output signals to the controller 142. The signals can include information relating to the determined states of the sensor 753 and/or the displacement of the plunger 754. In some embodiments, the sensor assembly 752 further includes a wireless device to enable the sensor assembly 752 to communicate wirelessly with the controller 142 and/or other remote devices (not shown). In some embodiments, the sensor assembly 752 includes a battery (not shown) to power the wireless device. In some embodiments, the sensor assembly 752 may communicate with the controller 142 and other components through a controller area network (CAN).

The controller 142 may perform one or more functions or calculations based on the information received from the sensor assembly 752. For example, the controller 142 may execute an algorithm to determine the volumetric flow rate through the fourth chamber 728 (or through the three-way valve assembly 700) based on the detected or determined displacement of the plunger 754 within the sensing chamber 774, the drag force of the fluid, the fluid flow velocity through the fourth chamber 728, and/or the fluid pressure at the inlet 708 of the housing assembly 704. The controller 142 may generate a value for the volumetric flow rate in units of gallons per minute (gpm), or any other suitable units for measuring volumetric flow rate. In other embodiments, the controller 142 may receive a flow rate from the sensor assembly 752 that is determined by sensor assembly 752. In yet other embodiments, the controller 142 may compare the displacement amounts of plungers 754 (or corresponding output signals from sensor assemblies 752) from a plurality of three-way valve assemblies 700 to detect fluid flow anomalies or irregularities (e.g., blockages, broken lines, restrictions, etc.) in the system 100. In such embodiments, the controller 142 may output an alert or alarm to a user of the system 100 in response to detecting a fluid flow anomaly or irregularity.

Information and data collected and/or determined by sensor assembly 752 and controller 142 may be stored on a suitable local memory device (e.g., included or connected to controller 142). Additionally or alternatively, such information and data may be stored or uploaded (e.g., via a suitable wired or wireless connection) to a remote memory or storage device (e.g., a cloud-based server or data storage service).

While various functions, calculations, and/or determinations are described herein as being performed by the sensor assembly 752 and/or the controller 142, it should be understood that such functions, calculations, and/or determinations may be performed or carried out by the sensor assembly 752, the controller 142, or some combination thereof. Moreover, aspects of the sensor assembly 752 may be included or integrated in the controller 142 and vice-versa, and the sensor assembly 752 and the controller 142 may be collectively referred to herein as a "controller" or "control system".

In some embodiments, components of the housing assembly 704 may be constructed of steel (e.g., stainless steel). In other embodiments, the components of the housing assembly 704 may be constructed of any suitable material that enables the three-way valve assembly 700 to function as described herein.

In some embodiments, the traveler 720, the plunger 754, and/or the diaphragm 772 may be constructed of plastic and/or rubber. In other embodiments, the traveler 720, the plunger 754, and/or the diaphragm 772 may be constructed of any suitable material that enables the three-way valve assembly 700 to function as described herein.

While, in some embodiments, the described methods and systems are used to handle a fluid that is applied to agricultural fields, such as a liquid fertilizer, the described methods and systems may be used for handling any type of fluids, not just fluids for use in the agricultural industry.

Embodiments of the valve assemblies described herein may be used to regulate flow rate of fluid and/or flow rate variation of fluid through individual dispensing tubes of a fluid application system, for example, via interchangeable travelers with plungers that define different slot configurations, interchangeable springs, and desired inlet pressures. Combinations of (i) travelers with specific slot configurations, (ii) springs, and/or (iii) inlet pressures may be selected by a user in order to achieve a desired flow rate and/or flow rate variation in the corresponding dispensing tube. Different valve assemblies may be configured to output different flow rates of fluid in the corresponding dispensing tube by using different combinations of travelers (e.g., with different slot configurations), springs, and/or inlet pressures. In some embodiments, the inlet pressure may be universal to all valve assemblies in a fluid application system, and the travelers and springs may be chosen such that a respective specific flow rate of fluid is output from each valve assembly at each universal inlet pressure. The flow rate of fluid output from each individual valve assembly may be specifically targeted to compensate for unique downstream non-linear pressure and flow restrictions (e.g., blockages or restrictions) such that the intended flow rate is emitted from each respective dispensing tube throughout the entire range of universal inlet pressure (e.g., in a linear fashion), and such that the total flow emitted from the dispensing tubes achieves a universal flow target amount over a wider flow range of universal inlet pressures.

Embodiments of the valve assemblies described herein may also detect and/or diagnose several conditions of fluid application systems, including, for example and without limitation, individual plugged rows from foreign debris, a group of plugged rows from a plugged or obstructed strainer, the presence of air in a fluid distribution tube resulting from operation on a hillside (i.e., where air goes up and liquid goes down), air or density issues from bad product, an empty tank, a failed or inoperative fluid pump, and metering device failures.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

When introducing elements of the present invention or the preferred embodiment(s) thereof, the articles "a", "an", "the" and "the" are intended to mean that there are one or more of the elements. The terms "comprising", "including" and "having" are intended to be inclusive and mean that there may be additional elements other than the listed elements. Moreover, the use of "top", "bottom", "above", "below" and variations of these terms is made for convenience, and does not require any particular orientation of the components.

As various changes could be made in the above without departing from the scope of the invention, it is intended that all matter contained in the above description and shown in the accompanying drawings shall be interpreted as illustrative and not in a limiting sense.

### Aspects of the Invention

1. A three-way valve assembly comprising:
   a housing assembly defining an inlet, a return outlet, a dispensing outlet, a return flow path extending from the inlet to the return outlet, and a dispensing flow path extending from the inlet to the dispensing outlet; and
   a diaphragm drip check comprising a plunger and a diaphragm retained within a sensing chamber sealed from the dispensing flow path, at least one magnet coupled to the diaphragm and generating a magnetic field, and a sensing assembly,
   wherein the plunger is operatively coupled to the diaphragm such that deflection of the diaphragm causes corresponding displacement of the plunger, and
   wherein the sensing assembly comprises a printed circuit board and at least one sensor, the printed circuit board positioned on the housing assembly such that the at least one sensor is affected by the at least one magnet as the plunger is displaced within the sensing chamber.
2. The three-way valve assembly of aspect 1, wherein the at least one sensor is a Hall effect sensor.
3. The three-way valve assembly of aspect 1, wherein the plunger comprises a neck extending between a head and a flange, and wherein the magnet is coupled to the plunger within the head or the neck.
4. The three-way valve assembly of aspect 1, wherein the diaphragm drip check further comprises a compression spring configured to bias the plunger against the diaphragm.
5. The three-way valve assembly of aspect 1, wherein the printed circuit board determines a position of the at least one magnet relative to the at least one sensor.
6. The three-way valve assembly of aspect 5, wherein the printed circuit board determines a displacement of the plunger based on the position of the at least one magnet relative to the at least one sensor.
7. The three-way valve assembly of aspect 6, wherein the printed circuit board determines a flow rate of fluid along the dispensing flow path based on the displacement of the plunger.
8. The three-way valve assembly of aspect 1, further comprising a vacuum check valve downstream of the diaphragm drip check relative to the dispensing flow path, the vacuum check valve configured to introduce an air bubble into fluid flowing through the dispensing flow path.
9. The three-way valve assembly of aspect 8, wherein the vacuum check valve comprises a ball check valve open to an environment around the three-way valve assembly.
10. The three-way valve assembly of aspect 1, further comprising a first chamber further defining the return flow path and a second chamber further defining dispensing flow path, wherein the first chamber is a same size as the second chamber.
11. A fluid application system comprising:
   a fluid storage tank;
   a manifold fluidly coupled to the fluid storage tank;
   a fluid transport device configured to effect fluid flow of a fluid from the fluid storage tank to the manifold; and
   a plurality of three-way valve assemblies connected in fluid communication with the manifold, each three-way valve assembly comprising:
      a housing assembly defining an inlet, a return outlet, a dispensing outlet, a return flow path extending from the inlet to the return outlet, and a dispensing flow path extending from the inlet to the dispensing outlet; and
      a diaphragm drip check comprising a plunger and a diaphragm retained within a sensing chamber sealed from the dispensing flow path, at least one magnet coupled to the diaphragm and generating a magnetic field, and a sensing assembly,
      wherein the plunger is operatively coupled to the diaphragm such that deflection of the diaphragm causes corresponding displacement of the plunger, and
      wherein the sensing assembly comprises a printed circuit board and at least one sensor, the printed circuit board positioned on the housing assembly such that the at least one sensor is affected by the at least one magnet as the plunger is displaced within the sensing chamber.
12. The fluid application system of aspect 11, wherein the fluid transport device is a pump configured to effect a pulsed fluid flow through the manifold to the plurality of three-way valve assemblies.
13. The fluid application system of aspect 12, further comprising a vacuum check valve downstream of the diaphragm drip check relative to the dispensing flow path, the vacuum check valve configured to introduce a respective air bubble into fluid flowing through the dispensing flow path during each pulse of the pulsed fluid flow.
14. The fluid application system of aspect 11, wherein the printed circuit board determines a position of the at least one magnet relative to the at least one sensor.
15. The fluid application system of aspect 14, wherein the printed circuit board determines a displacement of the plunger based on the position of the at least one magnet relative to the at least one sensor.
16. The fluid application system of aspect 15, wherein the printed circuit board determines a flow rate of fluid along the dispensing flow path based on the displacement of the plunger.
17. The fluid application system of aspect 11, further comprising a first chamber further defining the return flow path and a second chamber further defining the dispensing flow path, wherein the first chamber is a same size as the second chamber.
18. A fluid application system comprising:
   a fluid storage tank;
   a manifold fluidly coupled to the fluid storage tank;
   a plurality of three-way valve assemblies connected in fluid communication with the manifold, each three-way valve assembly comprising:
      a housing assembly defining an inlet, a return outlet, a dispensing outlet, a return flow path extending from the inlet to the return outlet, and a dispensing flow path extending from the inlet to the dispensing outlet; and
      a diaphragm drip check comprising a plunger and a diaphragm retained within a sensing chamber sealed from the dispensing flow path, at least one magnet coupled to the diaphragm and generating a magnetic field, and a sensing assembly, wherein the plunger is operatively coupled to the diaphragm such that deflection of the diaphragm causes corresponding displacement of the plunger, and wherein the sensing assembly comprises a printed circuit board and at least one sensor; and
   a controller communicatively coupled to the sensing assembly, the controller configured to calculate a flow rate of fluid along the dispensing flow path based on sensor output from the sensing assembly.
19. The fluid application system of aspect 18, wherein the sensing assembly detects a position of the at least one magnet relative to the at least one sensor and generates the sensor output based on the position of the at least one magnet.
20. The fluid application system of aspect 19, wherein the controller calculates the flow rate of the fluid along the dispensing flow path based on the position of the at least one magnet.

## Claims

1. A three-way valve assembly comprising:
a housing assembly defining an inlet, a return outlet, a dispensing outlet, a return flow path extending from the inlet to the return outlet, and a dispensing flow path extending from the inlet to the dispensing outlet; and
a diaphragm drip check comprising a plunger and a diaphragm retained within a sensing chamber sealed from the dispensing flow path, at least one magnet coupled to the diaphragm and generating a magnetic field, and a sensing assembly,
wherein the plunger is operatively coupled to the diaphragm such that deflection of the diaphragm causes corresponding displacement of the plunger, and
wherein the sensing assembly comprises a printed circuit board and at least one sensor, the printed circuit board positioned on the housing assembly such that the at least one sensor is affected by the at least one magnet as the plunger is displaced within the sensing chamber.

2. The three-way valve assembly of claim 1, wherein the at least one sensor is a Hall effect sensor.

3. The three-way valve assembly of claim 1, wherein the plunger comprises a neck extending between a head and a flange, and wherein the magnet is coupled to the plunger within the head or the neck.

4. The three-way valve assembly of claim 1, wherein the diaphragm drip check further comprises a compression spring configured to bias the plunger against the diaphragm.

5. The three-way valve assembly of claim 1, wherein the printed circuit board determines a position of the at least one magnet relative to the at least one sensor.

6. The three-way valve assembly of claim 5, wherein the printed circuit board determines a displacement of the plunger based on the position of the at least one magnet relative to the at least one sensor.

7. The three-way valve assembly of claim 6, wherein the printed circuit board determines a flow rate of fluid along the dispensing flow path based on the displacement of the plunger.

8. The three-way valve assembly of claim 1, further comprising a vacuum check valve downstream of the diaphragm drip check relative to the dispensing flow path, the vacuum check valve configured to introduce an air bubble into fluid flowing through the dispensing flow path.

9. The three-way valve assembly of claim 8, wherein the vacuum check valve comprises a ball check valve open to an environment around the three-way valve assembly.

10. The three-way valve assembly of claim 1, further comprising a first chamber further defining the return flow path and a second chamber further defining dispensing flow path, wherein the first chamber is a same size as the second chamber.

11. A fluid application system comprising:
a fluid storage tank;
a manifold fluidly coupled to the fluid storage tank;
a fluid transport device configured to effect fluid flow of a fluid from the fluid storage tank to the manifold; and
a plurality of three-way valve assemblies connected in fluid communication with the manifold, each three-way valve assembly as defined according to any one of claims 1-10.

12. The fluid application system of claim 11, wherein the fluid transport device is a pump configured to effect a pulsed fluid flow through the manifold to the plurality of three-way valve assemblies, optionally
further comprising a vacuum check valve downstream of the diaphragm drip check relative to the dispensing flow path, the vacuum check valve configured to introduce a respective air bubble into fluid flowing through the dispensing flow path during each pulse of the pulsed fluid flow.

13. A fluid application system comprising:
a fluid storage tank;
a manifold fluidly coupled to the fluid storage tank;
a plurality of three-way valve assemblies connected in fluid communication with the manifold, each three-way valve assembly comprising:
a housing assembly defining an inlet, a return outlet, a dispensing outlet, a return flow path extending from the inlet to the return outlet, and a dispensing flow path extending from the inlet to the dispensing outlet; and
a diaphragm drip check comprising a plunger and a diaphragm retained within a sensing chamber sealed from the dispensing flow path, at least one magnet coupled to the diaphragm and generating a magnetic field, and a sensing assembly, wherein the plunger is operatively coupled to the diaphragm such that deflection of the diaphragm causes corresponding displacement of the plunger, and wherein the sensing assembly comprises a printed circuit board and at least one sensor; and
a controller communicatively coupled to the sensing assembly, the controller configured to calculate a flow rate of fluid along the dispensing flow path based on sensor output from the sensing assembly.

14. The fluid application system of claim 13, wherein the sensing assembly detects a position of the at least one magnet relative to the at least one sensor and generates the sensor output based on the position of the at least one magnet.

15. The fluid application system of claim 14, wherein the controller calculates the flow rate of the fluid along the dispensing flow path based on the position of the at least one magnet.
